# EUROPÄISCHE PATENTSCHRIFT

(11) **EP 3 172 112 B1**
(45) Veröffentlichungstag und Bekanntmachung des Hinweises auf die Patenterteilung: **17.02.2021**
(21) Anmeldenummer: 15767236.1
(22) Anmeldetag: 21.07.2015
(51) Int. Cl.: B62B 7/00, B62B 7/14, B62B 7/06

(54) **KINDERWAGEN**
PUSHCHAIR
POUSSETTE

(30) Priorität: 23.07.2014 DE 102014010731; 10.09.2014 DE 102014013066; 30.06.2015 DE 102015008317
(43) Veröffentlichungstag der Anmeldung: 31.05.2017
(73) Patentinhaber: Endepro GmbH, 96257 Redwitz a. d. Rodach (DE)
(72) Erfinder: POPP, Alexander, Andre, 96257 Redwitz (DE)
(74) Vertreter: Küchler, Stefan
(86) Internationale Anmeldenummer: PCT/IB2015/001220
(87) Internationale Veröffentlichungsnummer: WO 2016/012850

(56) Entgegenhaltungen:
- EP-A2- 2 455 272
- WO-A1-2013/155928
- WO-A2-2005/108181
- US-A1- 2012 242 062
- US-A1- 2013 140 797

## Beschreibung

Die Erfindung richtet sich auf einen Kinderwagen, umfassend seitliche Gelenkverbindungen mit Anschlüssen Fahrgestellstreben in Form einer Hinterradstrebe und/oder einer Vorderradstrebe sowie für einen Schenkel eines Schiebebügels.

Kinderwagen sollen universell einsetzbar sein, dabei bequem, funktionell und stabil während des Gebrauchs; in Zeiten des Nichtgebrauchs sollen Kinderwagen dagegen möglichst wenig stören, also nur so wenig Platz beanspruchen wie möglich.

Gerade die letzte Bedingung ist wohl am schwersten zu erfüllen, weil dies nur durch eine effiziente Klappmechanik zu erreichen ist. Dabei ist es jedoch nicht damit getan, an geeigneten Stellen Gelenke vorzusehen; vielmehr sollen diese Gelenkverbindungen in auseinandergeklapptem Zustand möglichst steif sein, so dass der Kinderwagen eine ausreichende Stabilität erhält. Obendrein soll die Verstellung des Gelenks noch möglichst einfach und bequem sein. Beim Zusammenklappen des Gestells erweisen sich sperrige Bestandteile des Fahrgestells wie dessen Vorder- und/oder Hinterradstreben als besonders problematisch. Dokument WO2005/108181 A2 zeigt einen Kinderwagen, bei dem sich die Fahrgestellstreben und der Schenkel des Schiebebügels beim Einklappen des Kinderwagens um die gleiche Achse drehen.

Aus den Nachteilen des beschriebenen Standes der Technik resultiert das die Erfindung initiierende Problem, einen gattungsgemäßen Kinderwagen derart weiterzubilden, dass dieser möglichst klein zusammenfaltbar ist, dabei jedoch im auseinandergefalteten Zustand möglichst stabil ist. Andererseits soll die Anzahl der für das Zusammen- und/oder Auseinanderfalten notwendigen Handgriffe so gering als möglich sein.

Die Lösung dieses Problems gelingt dadurch, dass ein Verriegelungskörper bei vollständig ausgeklappter Fahrgestellstrebe zu deren Verriegelung in eine Einrastausnehmung hineingleiten kann, wobei ferner an einem mit dem Anschluss für einen Schenkel des Schiebebügels drehfest verbundenen Teil der Gelenkverbindung eine Anlauffläche für einen Nocken vorgesehen ist, welcher mit dem Verriegelungskörper oder mit einem in der Einrastausnehmung geführten Teil verbunden oder gekoppelt ist, um jenen in etwa radialer Richtung der betreffenden Gelenkverbindung zu steuern, und wobei sich wenigstens ein Koppelelement, nämlich der Verriegelungskörper oder die Einrastausnehmung oder ein darin eingreifendes, abgefedertes Teil, an der Fahrgestellstrebe befindet, während wenigstens ein anderes, damit zusammenwirkendes Koppelelement an einem Teil der Gelenkverbindung angeordnet ist, insbesondere an deren Gehäuse oder an einem Fortsatz derselben, wobei die Schwenkachse der nicht mit dem Gehäuse der Gelenkverbindung starr verbundenen Fahrgestellstrebe exzentrisch zu der Schwenkachse für den Schenkel des Schiebebügels angeordnet ist.

Demnach kann also bei einer für eine Arretierung geeigneten Schwenkstellung ein Verriegelungskörper oder ein in einer Einrastausnehmung geführtes Teil in radialer Richtung, bezogen auf die Schwenkachse des Schiebebügels, verschoben werden, um entweder durch unmittelbares Eingreifen in die Einrastausnehmung eines anderen Teils selbst einen Formschluss mit jenem herzustellen, oder um in der betreffenden Schwenkstellung innerhalb der Einrastausnehmung zurückzuweichen und diese für den Eingriff durch ein abgefedertes Teil, insbesondere an der verschwenkbaren Vorderrad- oder Hinterradstrebe, freizugeben, sodass durch jenes abgefederte Teil dann die eigentliche Einrastverriegelung bewirkt werden kann.

Besonders bevorzugt die Erfindung eine Anordnung, wobei an einem mit dem Anschluss für einen Schenkel des Schiebebügels drehfest verbundenen Teil der Gelenkverbindung eine Anlauffläche für einen Nocken vorgesehen ist, der mit einem Verriegelungsbolzen verbunden oder gekoppelt ist, welcher in dem Gehäuse der Gelenkverbindung in einer Richtung überwiegend radial zu der Schwenkachse des Schiebebügels verschiebbar geführt oder gelagert ist und in einer gegenüber dem Gehäuse der Gelenkverbindung verschwenkbaren Fahrgestellstrebe eine Einrastvertiefung vorfindet, in die er in deren vollständig ausgeklappter Position zu deren Verriegelung hineingleiten kann.

Eine solche Konstruktion koppelt die Position eines den Ein- oder Ausrastzustand bestimmenden Verriegelungsbolzens an den Schwenkwinkel eines mit dem Schiebebügel gekoppelten Teils der Gelenkverbindung. Dadurch wird erreicht, dass für das Zusammenfalten einer gegenüber dem Gehäuse der Gelenkverbindung ausklappbaren Fahrgestellstrebe kein eigenes Betätigungselement notwendig ist. Vielmehr wird dessen Ein- oder Ausrastzustand von dem Schwenkzustand des Schiebebügels abgeleitet. Ist also der Schiebebügel bereits in eine für das Verstauen geeignete Position verschwenkt, kann dann auch die gegenüber dem Gehäuse der Gelenkverbindung ausklappbare Fahrgestellstrebe eingeschwenkt werden. Im Endeffekt können dann eine Vorderradstrebe, eine Hinterradstrebe und ein Seitenschenkel des Schiebebügels nahe beieinander bzw. etwa parallel zueinander liegen, um den Platzbedarf zu minimieren. Wird andererseits im auseinandergefalteten Zustand des Fahrgestells der Schiebebügel in seine Gebrauchsposition hochgeschwenkt, so bleibt der Verriegelungsbolzen in der Einrastvertiefung, da der Nocken von dessen Anlauffläche dann nicht die Information ertastet, den Verriegelungsbolzen aus seiner Einrastvertiefung ausheben zu sollen. Diese Information wird dem Nocken erst durch ein abermaliges Zurückschwenken des Schiebebügels erteilt.

Erfindungsgemäß ist die Schwenkachse der nicht mit dem Gehäuse der Gelenkverbindung starr verbundenen Fahrgestellstrebe exzentrisch zu der Schwenkachse für den Schenkel des Schiebebügels angeordnet. Dadurch wird vor allem das parallele Heranschwenken beider Fahrgestellstreben begünstigt. Diese können dadurch in einer gemeinsamen Ebene nebeneinander und sogar parallel zueinander liegen, ohne sich gegenseitig zu stören. Indem die verschiedenen Streben solchermaßen innerhalb einer gemeinsamen Ebene liegen, verbessert sich die Statik und damit auch die Stabilität der Anordnung weiter.

Es liegt im Rahmen der Erfindung, dass der Verriegelungsbolzen innerhalb der von den beiden Schwenkachsen aufgespannten Ebene verschiebbar geführt ist. Seine zulässige Bewegungsrichtung ist also radial zu der zweiten Schwenkachse und vorzugsweise auch radial bezüglich der ersten Schwenkachse und somit in Richtung der betreffenden, gegenüber dem Gehäuse der Gelenkverbindung verschwenkbaren Fahrgestellstrebe.

Die Erfindung erfährt eine vorteilhafte Weiterbildung dahingehend, dass der Verriegelungsbolzen ein Langloch aufweist, durch welches die Drehachse für die nicht starr mit dem Gehäuse der Gelenkverbindung verbundene Fahrgestellstrebe hindurchgeführt ist. Diese Anordnung hat eine doppelte Funktion: Einerseits wird dadurch eine Verschiebbarkeit des Verriegelungsbolzens radial zu der Drehachse für die nicht starr mit dem Gehäuse der Gelenkverbindung verbundene Fahrgestellstrebe sichergestellt, und andererseits auch das maximale Maß der Verschiebung durch die Länge des Langlochs definiert.

Weitere Vorteile ergeben sich dadurch, dass der Verriegelungsbolzen durch eine Feder vorgespannt ist, insbesondere in Richtung zu der ausgeklappten, nicht starr mit dem Gehäuse der Gelenkverbindung verbundenen Fahrgestellstrebe hin. Eine solche Anordnung verfolgt den Zweck, ein selbsttätiges Einrasten des Verriegelungsbolzens bei vollständigem Ausschwenken der gegenüber dem Gehäuse der Gelenkverbindung beweglichen Fahrgestellstrebe zu bewirken und anschließend den eingerasteten Zustand dauerhaft zu stabilisieren.

Die Feder kann als Druckfeder ausgebildet sein und/oder als Spiralfeder. Eine Druckfeder kann einfach durch Einklemmen zwischen zwei auseinanderzuspreizende Teile appliziert werden. Spiralfedern lassen sich einfach herstellen und sodann als Druckfedern nutzen, ggf. aber auch als Zugfedern.

Die Erfindung empfiehlt, dass die Feder innerhalb des Langlochs des Verriegelungsbolzens angeordnet ist, derart, dass ihre Federkraft parallel zu der Längsrichtung des Langlochs gerichtet ist, und sich vorzugsweise mit einem Ende auf der Drehachse für die nicht starr mit dem Gehäuse der Gelenkverbindung verbundene Fahrgestellstrebe abstützt, mit ihrem anderen Ende dagegen vorzugsweise an der Innenseite eines Endes des Langlochs. Solchermaßen kann eine als Druckfeder betriebene Spiralfeder mit einfachsten Mitteln platziert und geführt werden und bleibt dabei stets funktionsfähig.

Es hat sich bewährt, dass der Nocken eine konvex gewölbte Kontaktfläche zur Anlage an der Anlauffläche des mit dem Anschluss für einen Schenkel des Schiebebügels drehfest verbundenen Teils der Gelenkverbindung aufweist. Eine zumindest in einer Raumrichtung konvexe Kontaktfläche nähert sich sanft ihrem Pendant und kann sich an jender daher niemals verhaken, läuft vielmehr stets reibungsarm an jenem entlang.

Weitere Vorzüge ergeben sich daraus, dass der Nocken derart mit dem Verriegelungsbolzen gekoppelt ist, dass er diesen aus seiner Verriegelungsstellung innerhalb der nicht starr mit dem Gehäuse der Gelenkverbindung verbundenen Fahrgestellstrebe ausheben kann. Die Koppelung muss also in der Lage sein, nötigenfalls auf den Verriegelungsbolzen eine diesen zu der zweiten Schwenkachse hin ziehende Kraft auszuüben, also radial nach innen. Eine entgegengesetzt gerichtete Kraft radial nach außen wird ja ggf. von der oben erwähnten Feder ausgeübt.

Für die gewünschte Kraftrichtung radial nach innen, zu der zweiten Schwenkachse hin, gibt es verschiedene Möglichkeiten. Zum Einen könnte sich der Nocken jenseits der ersten Achse befinden und also durch Anlaufen an einem erhöhten Bereich der Nockenbahn auf den Verriegelungsbolzen die gewünschte, radial nach innen gerichtete Kraft ausüben. Die Erfindung bevorzugt jedoch vielmehr einen schwenkbar gelagerten, zweiarmigen Hebel zur Koppelung des Nockens mit dem Verriegelungsbolzen, wobei ein Arm des Hebels mit dem Nocken und sein anderer Arm mit dem Verriegelungsbolzen verbunden und/oder gekoppelt ist.

Wenn sich ein Arm eines solchen Hebels bezüglich der zweiten Schwenkachse radial nach außen bewegt, soll der andere Arm radial nach innen schwenken, zu dieser hin. Dies lässt sich erreichen, indem die Schwenkachse des zweiarmigen Hebels parallel zu der Schwenkachse für den Anschluss des Schiebebügels und/oder parallel zu der Schwenkachse für den Anschluss der nicht mit dem Gehäuse verbundenen Fahrgestellstrebe verläuft, jedoch vorzugsweise exzentrisch zu der Schwenkachse für den Anschluss des Schiebebügels und/oder exzentrisch zu der Schwenkachse für den Anschluss der nicht mit dem Gehäuse verbundenen Fahrgestellstrebe, also jeweils nicht koaxial zu jenen Schwenkachsen.

Der zweiarmige Hebel kann als Wippe ausgebildet sein, deren beide Arme einen vorzugsweise stumpfen Winkel miteinander einschließen. Durch einen solchen, vorzugsweise nicht gerade gestreckten Winkel zwischen beiden Armen, also ungleich 180°, lässt sich auch die Bewegungsrichtung des einen Arms um einen entsprechenden Winkel gegenüber der des anderen Arms drehen.

Indem solchermaßen die Kontaktfläche des Nockens zur Anlage an der Anlauffläche des mit dem Anschluss für einen Schenkel des Schiebebügels drehfest verbundenen Teils der Gelenkverbindung an der stumpfwinkligen Innenseite des wippenförmigen Hebels angeordnet ist, können beide Arme an ihrer jeweiligen Position etwa radiale Bewegungen, bezogen auf die Schwenkachse für den Anschluss der nicht mit dem Gehäuse verbundenen Fahrgestellstrebe, ausführen, wodurch die innere Reibung der Anordnung minimiert und somit deren Verschleiß reduziert wird.

Die Erfindung erfährt eine vorteilhafte Weiterbildung, indem der mit dem Verriegelungsbolzen gekoppelte Arm des zweiarmigen Hebels einen Bereich des Verriegelungsbolzens umgreift, um diesen in Richtung zu der Schwenkachse des Schiebebügels zurückziehen zu können. Ein solches Umgreifen erlaubt eine Zugkraftkopplung, womit die gewünschte Zugkraft unmittelbar auf den Verriegelungsbolzen übertragen werden kann, ohne zusätzliche Koppelelemente.

Eine weltere Konstruktionsvorschrift besagt, dass aer mit aem Verriegelungsbolzen gekoppelte Arm des zweiarmigen Hebels ein Langloch aufweist, durch welches ein Stift des Verriegelungsbolzens hindurch geführt ist, welcher quer zur Längsrichtung des Verriegelungsbolzens verläuft. Somit erfolgt die Kopplung mittels eines in einem Langloch beweglichen Stifts. Dadurch können die zwei unterschiedlichen Bewegungen des Hebels einerseits und des Verriegelungsbolzens andererseits ohne zu klemmen miteinander gekoppelt werden. Denn während der Verriegelungsbolzen nur zu einer Linearbewegung in Richtung seiner Führung in der Lage ist, grenzt die Schwenkachse des zweiarmigen Hebels dessen Bewegungsfreiheit auf eine reine Drehbewegung um die Schwenkachse ein. Das exzentrisch zu dieser Schwenkachse angeordnete Langloch vollführt also eine bogenförmige Bahn. Deren Komponente in Richtung der Linearführung des Verriegelungsbolzens wird in eine Verschiebung desselben umgesetzt und die quer dazu verlaufende Bewegungskomponente wird weggefiltert, indem sich der Bolzen innerhalb des Langlochs verschiebt.

Die Längsrichtung des Langlochs in dem zweiarmigen Hebel kann an dessen Schwenkachse vorbeilaufen, insbesondere an dessen Innenseite. Damit ergibt sich eine stärkere Linearbewegung, weil nicht nur das Verschwenken des zweiarmigen Hebels abgegriffen wird, sondern auch noch durch die von der Linearführung erzwungene Verschiebung des Stifts gegenüber dem Langloch noch eine zusätzliche Bewegungskomponente in der zugelassenen Verschiebungsrichtung hervorruft. Durch die Überlagerung dieser beiden Bewegungen erfährt der Verriegelungsbolzen eine maximale Linearverschiebung.

Im Rahmen einer bevorzugten Ausführungsform der Erfindung verläuft der von dem Langloch des zweiarmigen Hebels umgriffene Stift des Verriegelungsbolzens parallel zu der Schwenkachse des zweiarmigen Hebels und/oder parallel zu der Schwenkachse für den Anschluss des Schiebebügels und/oder parallel zu der Schwenkachse für den Anschluss der gegenüber dem Gehäuse der Gelenkverbindung verschwenkbaren Fahrgestellstrebe. Durch eine solche Parallelität finden alle Schwenkbewegungen um diese Achsen innerhalb zueinander paralleler Ebenen statt oder sogar innerhalb einer einzigen, gemeinsamen Ebene. Der letztere Fall hat für die Übertragung von Kräften den Vorteil, dass keine Drehmomente um zu dieser gemeinsamen Ebene parallele Drehachsen auftreten, wodurch die Mechanik weniger beansprucht wird.

Die Erfindung lässt sich dadurch realisieren, dass für den zweiarmigen Hebel in der der betreffenden Fahrgestellstrebe abgewandten Rückseite des Verriegelungsbolzens eine Nut oder Vertiefung vorgesehen ist, welche von einem Stift des Verriegelungsbolzens durchgriffen wird, der auch das Langloch des zweiarmigen Hebels durchgreift. Diese Nut oder Vertiefung folgt einer von dem Stift lotrecht durchsetzten Ebene und erlaubt es dem freien Ende des zweiarmigen Hebels, in diese Nut oder Vertiefung einzutauchen und sich darin aufgrund ausreichenden Spiels beim Verschwenken des Hebels in der gewüpnschten Weise bewegen zu können.

Ferner besteht die Möglichkeit, dass an der der betreffenden Fahrgestellstrebe zugewandten Vorderseite des Verriegelungsbolzens eine schräge, gegenüber der Längsrichtung des Verriegelungsbolzens geneigte Anlauffläche vorgesehen ist, welche beim Ausschwenken bzw. Ausklappen der betreffenden Fahrgestellstrebe an einer Kante der Einrastvertiefung entlangläuft und von dieser zusammen mit dem Verriegelungsbolzen vorübergehend zurückgeschoben wird, um ein vollständiges Ausklappen der betreffenden Fahrgestellstrebe zu erlauben. Beim Ausklappen stellt der Verriegelungsbolzen somit kein Hindernis dar, sondern wird in dem benötigten Umfang selbsttätig zurückgeschoben.

Im Bereich der der betreffenden Fahrgestellstrebe zugewandten Vorderseite des Verriegelungsbolzens kann wenigstens eine zur Längsachse des Verriegelungsbolzens parallelen Flanke vorgesehen sein, die beim Einrasten der betreffenden Fahrgestellstrebe hinter eine Kante der Einrastvertiefung greift und ein Einklappen der betreffenden Fahrgestellstrebe verhindert, solange der Verriegelungsbolzen ausgefahren ist. In vollständig ausgeklapptem Zustand findet der Verriegelungsbolzen eine Vertiefung vor, worin er einschnappen kann, vorzugsweise selbsttätig unter dem Einfluss einer ihn nach außen drückenden Feder, die beispielsweise innerhalb eines Langlochs des Verriegelungsbolzens eingabaut ist und sich mit ihrem rückwärtigen Ende beispielsweise an der exzentrisch angeordneten Drehachse für die gegenüber dem Gehäuse des Gelenks verstellbare Fahrgestellstrebe abstützen kann. Eine solche Feder kann den Verriegelungsbolzen beständig nach außen drücken und dadurch in eingerastetem Zsutand halten; andere Haltemechanismen wie bspw. ein Verriegelungsmechanismus wären denkbar, sind aber aufwändiger und umständlicher zu bedienen. Dabei stellt die zur Längsachse des Verriegelungsbolzens parallele Flanke sicher, dass sich der Verriegelungsbolzen nicht etwa selbsttätig zurückschieben kann, selbst wenn auf die betreffende Fahrgestellstrebe ein zusammenfaltendes Drehmoment ausgeübt wird.

Demnach liegt ein Kern der Erfindung darin, dass zum Lösen der Arretierung einer Gelenkverbindung des Gelenks eine Wippe vorgesehen ist, die gegen wenigstens ein Federelement arbeitet. Diese Wippe entspricht dem zuvor erwähnten zweiarmigen Hebel, der wie auch die Feder mit dem Verriegelungsbolzen gekoppelt ist. Die Feder, welche bevorzugt innerhalb des Verrieegelungsbolzens eingebaut ist, beispielsweise innerhalb eines Langlochs desselben, ist bestrebt, den Verriegelungsbolzen von dem Gelenk weg in Richtung zu der zu verriegelnden Fahrgestellstrebe zu drücken, während die Wippe bei Ertasten eines entsprechenden Stellbefehls entlang einer Nockenlaufbahn den Verriegelungsbolzen unter Spannung dieser Feder von der Fahrgestellstrebe weg in Richtung zu dem Gelenk hin zieht und also ein Ausrasten ermöglicht.

Zur Arretierung eines verschwenkbaren Teils des Gelenks können dessen Stirnseiten reibschlüssig an ein inneres Teil des Gelenks gepresst werden. Hierbei handelt es sich um einen Bestandteil der Gelenk-Hauptmechanik, welche das Verschwenken oder Arretieren des Schiebebügels steuert. Der Vorteil ist eine besonders hohe Stabilität, weil die aneinander gepressten Gelenkteile quasi wie ein einziges Teil und somit in höchstem Maße steif miteinander verbunden sind, natürlich nur vorübergehend, bis die Arretierung gelöst wird.

An einem Gelenk ist ein Adapter festlegbar, mit welchem verschiedene Aufsätze an dem Fahrgestell des Kinderwagens angebaut werden können, beispielsweise Babyschalen, Sport- oder Buggysitze, Liegesitze ähnlich Tragetaschen, etc. Dadurch ist einerseits das erfindungsgemäß ausgestattete Fahrgestell universell einsetzbar, und andererseits kann der Aufsatz beim Zusammenklappen des Gestells nötigenfalls abgenommen werden, um den dann noch beanspruchten Stauraum zu minimieren. Falls andererseits ein Aufsatz in sich ausreichend gelenkig oder beweglich ist, so muss er nicht unbedingt entfernt werden, sondern wird zusammen mit dem Gestell zusammengelegt.

Schließlich entspricht es der Lehre der Erfindung, dass ein Aufsatz einen Faltrahmen für das Verdeck aufweist, der an einem Adapter des Fahrgestells festlegbar ist und mechanisch nicht mit weiteren Rahmenteilen der Sitzfläche des Aufsatzes verbunden ist, sondern die Rahmenteile der Sitzfläche des Aufsatzes hängen nur über den (Bezugs-) Stoff des Aufsatzes an dem Faltrahmen für das Verdeck. Eine solche Entkopplung der oberen und unteren Rahmenteile eines Aufsatzes wird eben die oben angesprochene Beweglichkeit erzielt, die es erlaubt, den gesamten Kinderwagen ohne vorherige Demontage des Aufsatzes platzsparend zusammenzulegen.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

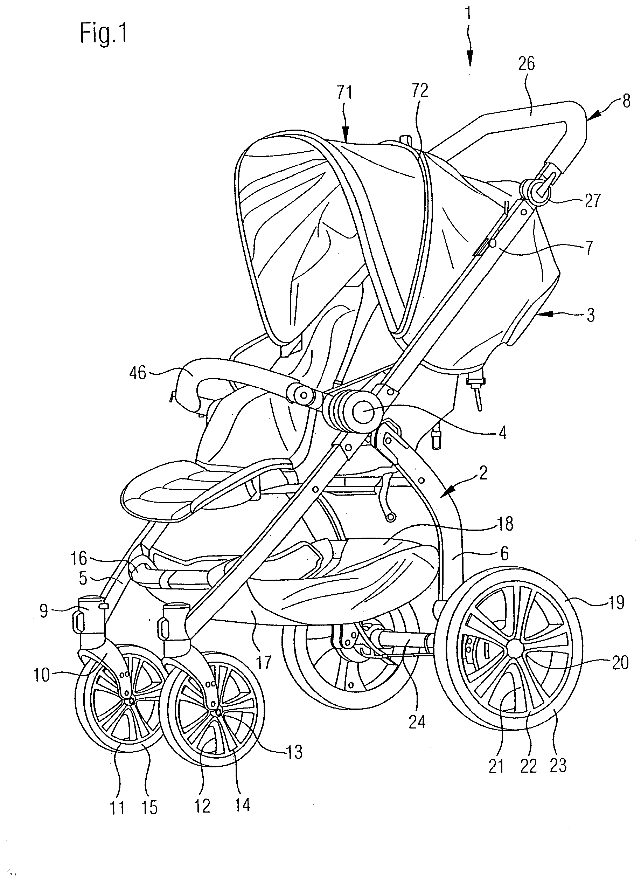

- Fig. 1: einen erfindungsgemäßen Kinderwagen in einer perspektivischen Ansicht, wobei das Kind mit Blick in Fahrtrichtung sitzt;

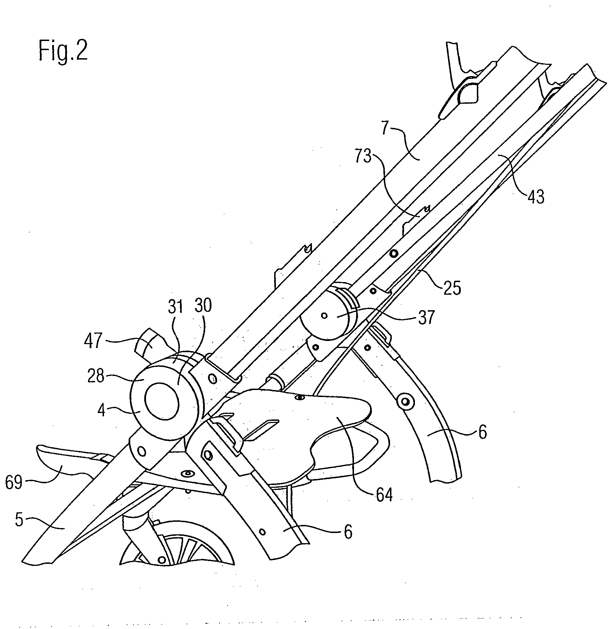

- Fig. 2: einen Ausschnitt des Kinderwagens nach Fig. 1 bei abgenommenem Aufsatz, ebenfalls in einer perspektivischen Ansicht;

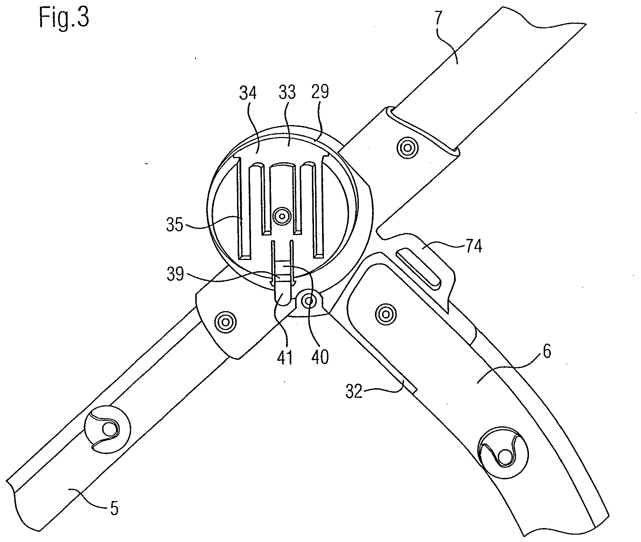

- Fig. 3: ein Detail um ein Schwenkgestell des Fahrgestells des Kinderwagens nach den Fig. 1 und 2 mit einer Befestigungsmöglichkeit für einen Aufsatz;
- Fig. 4: eine Seitenansicht auf einen Aufsatz zur Festlegung an dem Kinderwagen-Fahrgestell nach Fig. 3, teilweise abgebrochen dargestellt;
- Fig. 5: ein vorzugsweise flexibles Element eines an dem Kinderwagen nach den Fig. 1 bis 3 festlegbaren Aufsatzes;
- Fig. 6: ein anderes, vorzugsweise steifes, gegebenenfalls einstellbares Element eines an dem Kinderwagen nach den Fig. 1 bis 3 festlegbaren Aufsatzes;
- Fig. 7a: ein weiteres, vorzugsweise steifes Element eines an dem Kinderwagen nach den Fig. 1 bis 3 festlegbaren Aufsatzes in einer Vorderansicht;
- Fig. 7b: das steife Element aus Fig. 7a in einer perspektivischen Ansicht, teilweise abgebrochen;
- Fig. 7c: das steife Element aus den Fig. 7a und 7b in einer perspektivischen Sprengdarstellung;

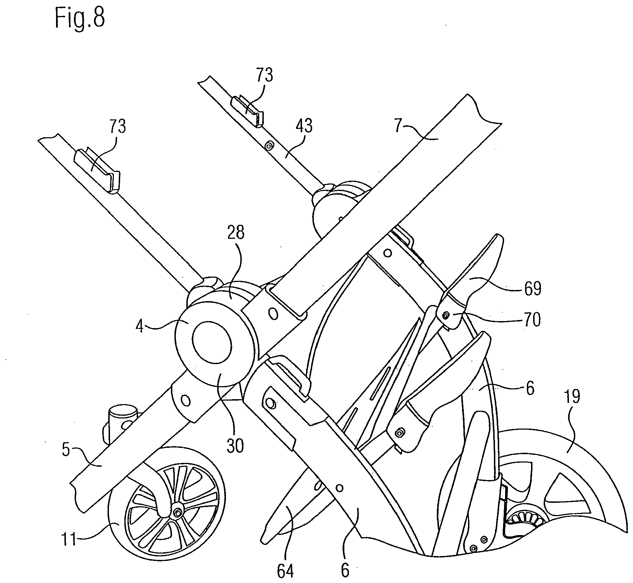

- Fig. 8: eine etwa der Fig. 2 entsprechende Ansicht auf Rahmenteile des Kinderwagens nach den Fig. 1 bis 3, wobei der Rahmen derart eingestellt ist, dass bei komplett daran montiertem Aufsatz das Kind nicht in Fahrtrichtung blickt, sondern Blickkontakt zu einer den Kinderwagen schiebenden Person hat;

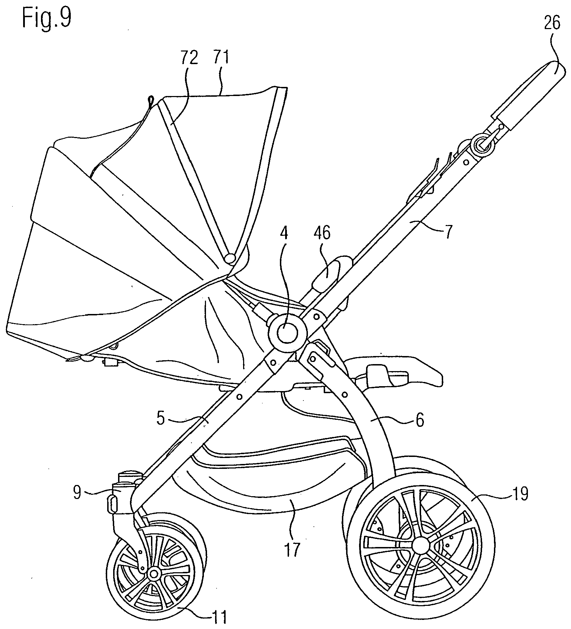

- Fig. 9: eine Seitenansicht des vollständig montierten Aufsatzes in der Position gemäß Fig. 8;
- Fig. 10: ein Gelenk des Kinderwagengestells nach den Fig. 1 bis 3 oder 8 und 9, mit zwei daran anschließenden Fahrgestellstreben und einem ebenfalls davon weg strebenden Holm des Schiebebügels;
- Fig. 11: eine Sprengdarstellung der Anordnung nach Fig. 10, so dass das Innenleben des Gelenks sowie des Schiebebügel-Holms erkennbar ist;
- Fig. 12: eine Seitenansicht auf die Anordnung nach Fig. 10, teilweise abgebrochen und teilweise im Schnitt, wobei das Gelenk in vollkommen arretiertem Zustand wiedergegeben ist;
- Fig. 13: das Gelenk aus Fig. 12 in einer vergrößerten Darstellung;
- Fig. 14: einen Schnitt durch das Gelenk nach Fig. 13 entlang der Linie XIV - XIV;
- Fig. 15: das Gelenk aus Fig. 12 in einer der Fig. 13 entsprechenden Darstellung, in zwar entriegeltem, jedoch noch eingerasteten Zustand;
- Fig. 16: eine der Fig. 14 entsprechende Darstellung des Gelenks in dem Zustand gemäß Fig. 15;
- Fig. 17: das Gelenk aus Fig. 12 in einer den Fig. 13 und 15 entsprechenden Darstellung, jedoch in nicht nur entriegeltem, sondern auch ausgerasteten Zustand;
- Fig. 18: eine den Fig. 14 und 16 entsprechende Darstellung des Gelenks in dem Zustand gemäß Fig. 17;
- Fig. 19: die Anordnung nach Fig. 17, wobei der zunächst ausgerastete Schiebebügel in die andere Betriebsposition verschwenkt ist, wo er wieder eingerastet ist, wobei sich die Schiebe- und damit Fahrtrichtung nun umkehrt;
- Fig. 20: die Anordnung nach Fig. 18, wobei der schiebebügel in der neuen Betriebsposition nun auch verriegelt ist;
- Fig. 21: das Gelenk der Anordnung nach Fig. 18 in einer vergrößerten Darstellung, in vollkommen verrigeltem Zustand;
- Fig. 22: die Anordnung nach Fig. 21, wobei der Schiebebügel nun wieder entriegelt ist;
- Fig. 23: die Anordnung nach Fig. 22, wobei der Schiebebügel nach vollständigem Ausrasten weiter geschwenkt ist bis in eine zusammengeklappte bzw. an eine Strebe des Fahrgestells herangefaltete Position, wobei andererseits der Rastmechanismus für die zweite, gegenüber dem Gehäuse des Gelenks verstellbare Fahrgestellstrebe ausgerastet ist;
- Fig. 24: das Fahrgestell in einer der Fig. 24 entsprechenden Ansicht, jedoch vollständig zusammengeklappt, so dass der Schiebebügel einerseits und eine Fahrgestellstrebe andererseits an die andere Fahrgestellstrebe herangefaltet sind; sowie
- Fig. 25: den gesamten Kinderwagen bei entsprechend Fig. 24 zusammengefaltetem Fahrgestell, ohne dass hierfür der Aufsatz zuvor demontiert werden müsste.

Der in der Zeichnung wiedergegebene Kinderwagen 1 ist derart konzipiert, dass er zusammen- und auch wieder auseinandergefaltet werden kann und dabei sowohl im auseinandergefalteten Zustand besonders bequem handhabbar ist als auch in zusammengefaltetem Zustand nur sehr wenig Platz beansprucht. Hierzu trägt die besondere Gestaltung des Fahrgestells 2 bei, aber auch die besondere Struktur des Aufsatzes 3.

Das Fahrgestell 2 ist symmetrisch aufgebaut bezüglich einer vertikalen, zur Fahrtrichtung parallelen Mittelebene. Zentrale Bestandteile des Fahrgestells 2 sind zwei jeweils seitlich angeordnete Gelenke 4, welche nicht direkt miteinander verbunden sind.

Beide Gelenke haben den gleichen Aufbau, sind jedoch vorzugsweise spiegelbildlich zueinander. Es gibt jeweils Anschlüsse oder Verbindungen zu wenigstens vier Elementen: Zu je zwei Streben des Fahrgestells 2, nämlich zu einer Vorderradstrebe 5 und einer Hinterradstrebe 6, zu dem Aufsatz 3, sowie zu je einem Seitenschenkel 7 eines Schiebebügels 8.

Bevorzugt führt jede Vorderradstrebe 5 zu je einem in einem Drehgelenk 9 um eine vertikale Achse lenkbaren und in einer gabelförmigen Aufnahme 10 drehbar gelagerten Vorderrad 11, dessen über Speichen 12 mit der Radnabe 13 verbundene Felge 14 mit einer Bereifung 15 versehen sein kann, beispielsweise aus Hartgummi. Da Radnabe 13 dank der gabelförmigen Aufnahme 10 gegenüber dem Drehgelenk 9 in horizontaler Richtung nach hinten versetzt ist, ergibt sich ein die automatische Lenkung des betreffenden Vorderrades 11 steuernder Nachlauf.

Vorzugsweise sind die Vorderradstreben 5 nicht miteinander verbunden oder nur durch einen etwa auf halber Höhe oder im unteren Bereich quer zur Fahrtrichtung verlaufende Strebe 16 zum Einhängen eines Transportkorbs oder einer flexiblen, muldenförmig zugeschnittenen Transportmatte 17, die außerdem noch an einer zweiten Strebe 18 eingehängt ist, die auf etwa der selben Höhe die beiden Hinterradstreben 6 miteinander verbindet.

Während die Vorderradstreben 5 vorzugsweise gerade gestreckt verlaufen oder allenfalls nach unten zu geringfügig nach innen gebogen sind, um den Kinderwagen 1 an engen Passagen besser steuern zu können, können die Hinterradstreben 6 zwar in einer zur Fahrtrichtung parallelen Ebene verlaufen, aber dabei einem bogenförmig geschwungenen Verlauf folgen, so dass sie im oberen Bereich von dem Gelenk 4 nach hinten unten weg streben, in ihrem unteren Bereich nahe der Hinterräder 19 dagegen nahezu senkrecht verlaufen und sich also in etwa vertikaler Richtung auf den hinteren Rädern 19 abstützen.

Die hinteren Räder 19 sind vorzugsweise ähnlich der Vorderräder 11 ausgebildet, also mit einer Radnabe 20, davon radial weg strebenden Speichen 21 und je einer von diesen getragenen Felge 22, worauf eine Bereifung 23 vorgesehen sein kann, insbesondere aus Hartgummi oder in Form von luftgefüllten Reifen, etc.

Wie bei den Vorderrädern 11, so ist es natürlich auch bei den Hinterrädern 19 möglich, dass diese mit Luftreifen versehen sein können.

Im Gegensatz zu den Vorderrädern 11 sind jedoch die Hinterräder 19 vorzugsweise nicht lenkbar. Stattdessen, sitzen sie auf einer gemeinsamen Achse 24, auf welcher sich die beiden Hinterradstreben 6 jeweils über Federungen abstützen, um den Fahrkomfort für ein Kind zu erhöhen.

Außerdem kann eine Feststellbremse vorgesehen sein, die sich beispielsweise über einen Bowdenzug 25 vom Griff 26 des Schiebebügels 8 aus arretieren und/oder lösen lässt. Natürlich kann zum Feststellen und/oder Lösen der Bremse auch ein Fußpedal od. dgl. vorgesehen sein.

Je nach Ausführungsform können die beiden Hinterräder 19 getrennt voneinander auf einer Achse 24 gelagert sein, wobei dann zwei Bremsvorrichtungen vorzusehen sind, oder sie sind mit einer drehbar gelagerten Achse 24 starr verbunden, so dass nur eine einzige, auf eben diese Achse 24 einwirkende Bremsvorrichtung benötigt wird.

Der Griff 256 des Schiebebügels 8 kann über Gelenke 276 seinerseits schenkbar mit den oberen Enden der Seitenschenkel 7 des Schiebebügels 8 verbunden sein.

Das Gehäuse 28 jedes Gelenks 4 ist bevorzugt mit der betreffenden Vorderradstrebe 5 verbunden, dieser gegenüber also nicht verdrehbar.

Das Gehäuse 28 des Gelenks 4 hat eine substantiell etwa zylindrische Struktur mit einer inneren, dem Aufsatz 3 zugewandten Stirnseite 29 und einer äußeren, diesem Aufsatz 3 abgewandten Stirnseite 30; dazwischen befindet sich eine Mantelfläche 31. Von dieser Mantelfläche 31 ragt seitlich ein Fortsatz 32 weg.

Während sich der Anschluss für den Schiebebügel 8 an der Mantelfläche 31 des zylindermantelförmigen Gehäuse-Hauptabschnitts befindet, strebt die Hinterradstrebe 6 von dem seitlichen Fortsatz 32 weg.

Der Anschluss 33 für den Aufsatz 3 befindet sich an der innenliegenden Stirnseite 29. Dieser Anschluss hat die Gestalt einer flachen Scheibe 34, worin sich wenigstens ein, vorzugsweise mehrere, insbesondere zwei oder drei oder vier oder fünf oder sechs jeweils zueinander parallele Schlitze 35 befinden.

Die Scheibe 34 ist mit ihrer Rückseite an der inneren Stirnseite 29 des Gelenk-Gehäuses 28 unverdrehbar und/oder unbeweglich festgelegt oder damit integriert, und zwar derart, dass die mit den Schlitzen 35 versehen Flachseiten 36 beider, an je einem Gelenk 4 angeordneter Scheiben 34 einander zugewandt sind.

Die Ausrichtung der Scheiben 34 ist derart, dass die Schlitze 35 allesamt in vertikaler Richtung oder in überwiegend vertikaler Richtung verlaufen. Diese Schlitze haben jeweils ein oberes und ein unteres Ende. Während die unteren Enden geschlossen sind, so dass dort der betreffende Schlitz 35 stumpf endet, sind sind die oberen Enden der Schlitze 35 offen, so dass von dort her Stegelemente 36 eingeschoben werden könne.

Dies ist deshalb wichtig, weil sowohl die Schlitze 35 als auch die dahinein schiebbaren Stege 36 keine rechteckigen Querschnitte aufweisen, sondern hinterschnitten sind, beispielsweise nach Art einer Schwalbenschwanzverbindung oder in dem sich die Querschnitte querschnittlich stufenartig verjüngen, so dass jeweils ein verbreiterter Stegabschnitt im Bereich einer freien Längsseite des Stegs 36 mit einem im Grund des nutförmigen Schlitzes 35 verbreiterten Schlitzabschnitt zusammenwirkt, während der zu seiner Mündung hin verjüngte Schlitzquerschnitt mit einem verjüngten Stegquerschnitt nahe dessen Grund zusammenwirkt. Daher lassen sich die Stege 36 nicht in horizontaler Richtung von den Schlitzen 35 lösen, sondern nur in vertikaler Richtung nach oben, unter Überwindung der entgegen gerichteten, nach unten wirkenden Gewichtskraft des Aufsatzes 3.

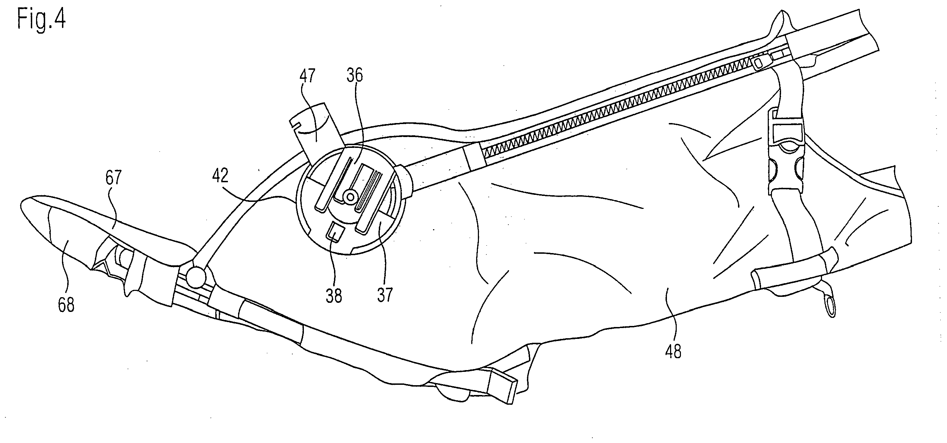

Wie man Fig. 4 entnehmen kann, sind die Stege 36 ihrerseits an einer Scheibe 37 angeordnet und dadurch zusammengefasst, welche den Aufsatz 3 trägt.

Ferner ist zu erkennen, dass die Anordnung der Schlitze 35 wie auch die Anordnung der darin einschiebbaren Stege 36 an der jeweiligen Scheibe 34, 37 symmetrisch zu einer Mittellinie ist. Dies hat zur Folge, dass der Aufsatz 3, welcher an beiden Seiten je eine Scheibe 37 aufweist, auch in um 180° um eine zu den Schlitzen 35 bzw. Stegen 36 parallele Achse gedrehtem Zustand an dem Fahrgestell 2 des Kinderwagens 1 einhängbar ist. Dies erlaubt es, den Aufsatz 3 sowohl in Fahrtrichtung als auch entgegen der Fahrtrichtung auf dem Fahrgestell 2 zu montieren.

Zwar ist bereits durch die Schwerkraft ein versehentliches Lösen des Aufsatzes 3 von dem Fahrgestell 2 so gut wie ausgeschlossen. Dennoch sieht die Erfindung zusätzlich noch eine Verriegelung vor, welche eine Ausnehmung oder Vertiefung 38 in einer der beiden Scheiben 34, 37 umfasst sowie einen Fortsatz 39 an der jeweils anderen Scheibe 37, 34, welcher zurückfedern kann, beispielsweise indem er an einer durch seitliche Schlitze von der umgebenden Scheibe 34, 37 teilweise freigeschnittenen Zunge 40 angeordnet ist.

Ist der Fortsatz 39 in die Vertiefung 38 eingerastet, hält ihn die federnde Zunge 40 in diesem Zustand und sorgt damit dafür, dass der Aufsatz 3 nicht mehr nach oben aus den Aufnahmeschlitzen 35 herausgehoben werden kann.

Um den Aufsatz 3 nun wieder von dem Fahrgestell 2 lösen zu können, ist an dem freien Ende der Zunge 40 eine über den Rand der betreffenden Scheibe 34, 37 überstehende Lasche 41 vorgesehen, beispielsweise angfeformt. Diese überstehende Lasche 41 ist auch bei aneinander liegenden Scheiben 34, 37 von außen zugänglich und kann von der jeweils anderen Scheibe weggebogen werden, bis der an der Fortsatz 39 der Zunge 40 von der Vertiefung 38 freikommt und also der Aufsatz 3 nach oben entnommen werden kann. Natürlich kann die Anordnung der Schlitze 35 und Stege 36 auch vertauscht sein, d.h., die fahrgestellseitigen Scheiben 34 verfügen dann über Stege, welche in Schlitzen an den aufsatzseitigen Scheiben 37 eingreifen.

Der Darstellung nach Fig. 4 ist weiter zu entnehmen, dass die aufsatzseitigen Scheiben 37 die selbe Umfangsgestalt aufweisen wie die fahrgestellseitigen Scheiben 34.

Vorzugsweise haben die aufsatzseitigen Scheiben 37 und/oder die fahrgestellseitigen Scheiben 34 eine kreisförmige Grundfläche, also eine kreisrunde bzw. zylindrische Mantelfläche 42.

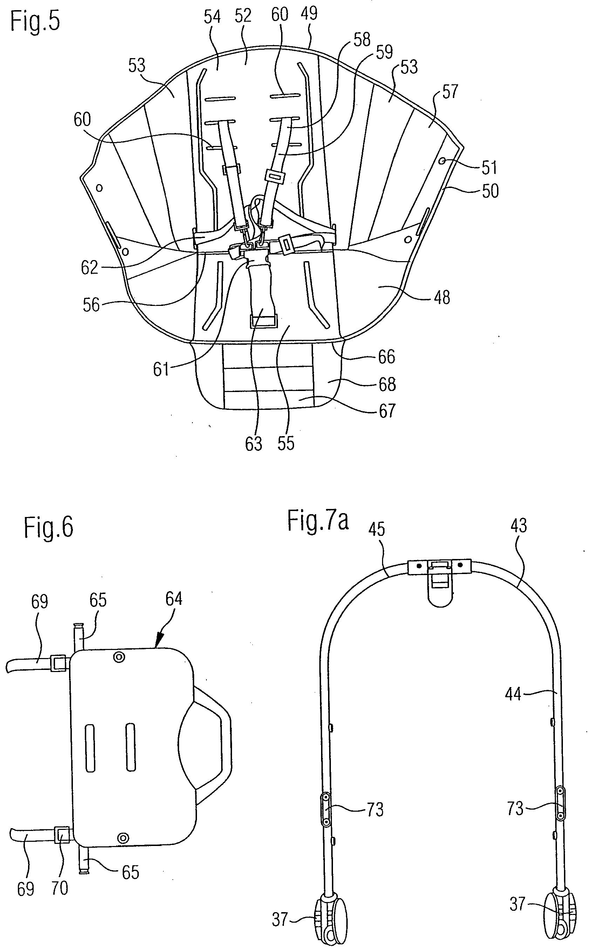

An den aufsatzseitigen Scheiben 37, insbesondere an deren Mantelflächen 42 ist wenigstens ein tragendes Element des Aufsatzes 3 befestigt, insbesondere ein Bügel 43 mit einem U-förmigen Verlauf, also mit zwei zueinander parallelen Seitenschenkeln 44, welche durch einen endseitigen Steg 45 an ihren den Scheiben 37 abgewandten Enden miteinander verbunden sind. Der Bügel 43 ist in den Fig. 7a bis 7c detailliert wiedergegeben.

Daraus ist erkennbar, dass die Seitenschenkel 44 des Bügels 43 radial von den Mantelflächen 42 der Scheiben 37 weg streben.

Andererseits verlaufen die Seitenschenkel 44 des Bügels 43 im Gebrauchszustand nicht parallel zu den Stegen 36 oder Schlitzen 35 der aufsatzseitigen Scheibe 37, sondern unter einem Winkel in der Größenordnung von etwa 45°. Dadurch ragt der Bügel 43 in eingestecktem und arretierten bzw. verriegelten Zustand unter einem ebensolchen Winkel von etwa 45° nach oben - entweder in oder entgegen der Fahrtrichtung, je nachdem, mit welcher Orientierung der Aufsatz 3 auf das Fahrgestell 2 aufgesteckt wurde.

Ferner kann mit den als Adapter dienenden Scheiben 37 des Aufsatzes 3 weiterhin ein das Kind am Aufstehen hindernder Beckenbügel 46 verbunden sein. Vorzugsweise ist ein solcher Beckenbügel 46 abnehmbar. Er kann auch einen U-förmigen Verlauf haben, so dass seine Schenkelenden in mit je einer Adapter-Scheibe 37 verbundene Hülsen 47 einsteckbar sind.

Bevorzugt erstreckt sich der Beckenbügel 46 im Gebrauchszustand nicht in der selben Ebene wie der Tragebügel 43 für den Aufsatz 3. Vielmehr können jene beiden Bügel 43, 46 einen Zwischenwinkel von etwa 60° bis 150° miteinander einschließen; im dargestellten Beispiel beträgt dieser Winkel etwa 100°. Dabei liegt die Richtung der Schlitze 35 oder Stege 35 an der betreffenden Scheibe 37 zwischen diesen beiden Bügelebenen, vorzugsweise etwa mittig dazwischen, wie Fig. 4 erkennen lässt.

In der Fig. 4 ist die Gebrauchsstellung der beiden Bügel 43, 47 wiedergegeben. Da sich diese Gebrauchsstellung jedoch für manche Situationen, beispielsweise für den Transport des Kinderwagens in einem Kofferraum od. dgl., als relativ sperrig erweist, ist erfindungsgemäß vorgesehen, dass beide Bügel 43, 37 unabhängig voneinander gegenüber den Scheiben 37 drehverstellbar sind. Insbesondere ist/sind ein oder vorzugsweise beide Bügel 43, 37 von der Gebrauchsstellung aus in beiden Drehrichtungen verschwenkbar, so dass unabhängig von der Stellung des Schiebebügels 8 jeweils eine platzsparende Konstellation der beiden Bügel 43, 47 etwa in Richtung des Schiebebügels 8 eingenommen werden kann.

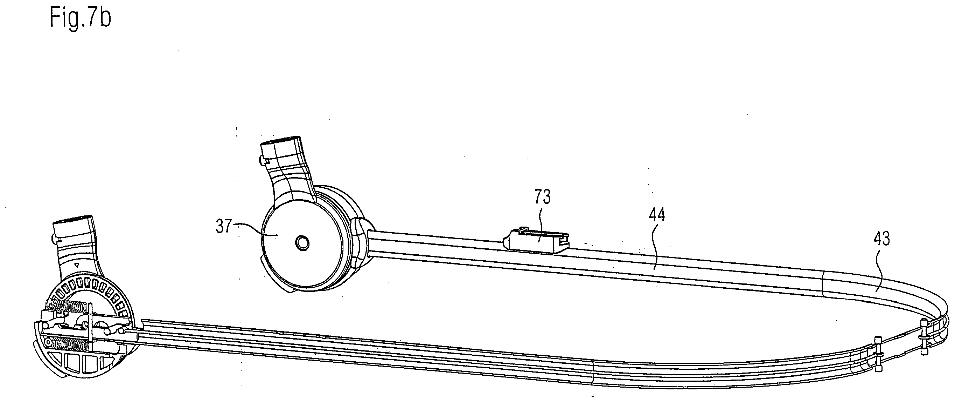

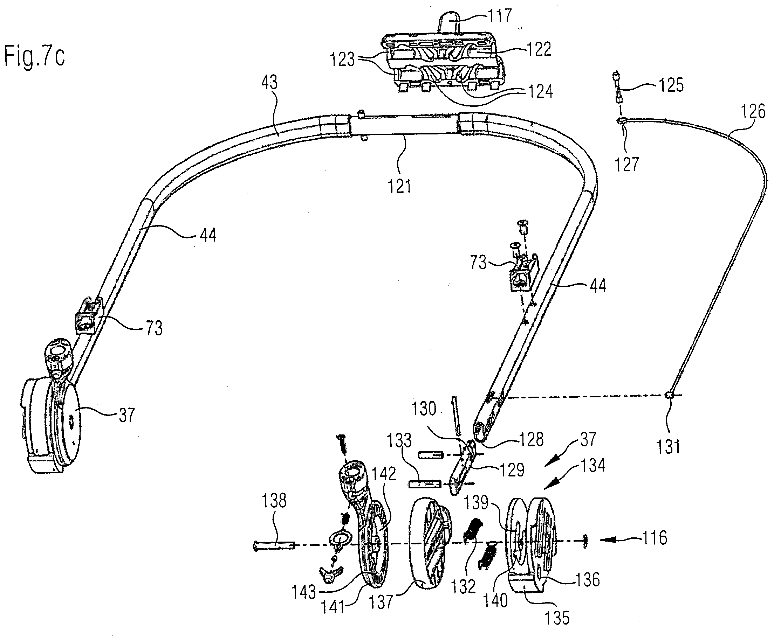

Die jenes leistenden Verriegelungsmechaniken 116 befinden sich jeweils in den aufsatzseitigen Scheiben 37 und sind in den Fig. 7b und 7c deutlich zu sehen; in Fig. 7b ist ferner der Tragbügel 43 seiner Länge nach aufgeschnitten dargestellt, so dass man auch dessen Innenleben erkennen kann. Die Verriegelungsmechaniken 116 werden gemeinsam gesteuert durch ein Betätigungselement 117 im Bereich des Stegs oder Scheitels 118 zwischen den beiden Seitenschenkeln 44 des Tragbügels 43. Das Betätigungselement 117 umfasst eine den Tragbügel 43 umschließende Hülse 119, vorzugsweise mit einer radial auskragenden Lasche 120. Die Hülse 119 ist in Längsrichtung des Tragbügels 43 in einem muldenartig vertieften Bereich 121 geführt und kann daher nur um den Tragbügel 43 herum geschwenkt werden.

An seiner Innenseite 122 weist die Hülse 119, die zum Zwecke der Montage in zwei Halbschalen 123 unterteilt ist, welche um den Tragbügel 43 herum geschlossen werden, zwei schraubenförmige Vertiefungen 124 auf, welche jedoch unterschiedlich orientiert sind. Die beiden Vertiefungen 124 bestehen jeweils aus zwei Abschnitten, von denen einer an der oberen Halbschale 123, der andere an der unteren Halbschale 123 angeordnet ist. Die Vertiefungen in der selben Halbschale folgen unterschiedlichen Verläufen - eine ist rechtsgängig, die andere linksgängig. Dabei sind die beiden Halbschalen 123 an ihren Innenseiten 122 vorzugsweise identisch zueinander ausgebildet. Insgesamt gibt es also insgesamt 4 den Tragbügel 43 auf jeweils 180° umgebende Schraubengänge 124, jeweils zwei an der oberen Halbschale 123 und zwei an der unteren Halbschale 123.

In diese beiden schraubenförmigen Vertiefungen 124 greift je ein Stift 125 ein, welcher den Tragbügel 43 quer zu dessen lokaler Längsrichtung durchsetzt und in einem dortigen Langloch 126 in eben dieser lokalen Längsrichtung - also quer zur Sitzrichtung - verschiebbar ist. Die Stifte 125 ragen jeweils mit ihren beiden Enden aus dem Langloch 126 heraus, und jedes Ende greift in je einen der vier Schraubengänge 124 der Hülse 119 ein. Die Folge ist, dass bei einem Verschwenken der Hülse 119 um etwa 180° vermittels der Schraubengänge 124 die beiden Stifte 125 in ihren Langlöchern 126 verschoben werden, und zwar jeweils in entgegengesetzten Richtungen, also entweder beide aufeinander zu oder beide voneinander weg.

An jedem der beiden Stifte 125 ist jeweils ein Zugdraht oder ein sonstiges Zugmittel 126 befestigt, beispielsweise mit einer Schlaufe oder Öse 127 an einem Ende des Zugmittels 126. Die beiden Zugmittel 126 erstrecken sich innerhalb des hohl ausgebildeten Tragbügels 43 von dem Betätigungselement 117 weg durch je einen Seitenschenkel 44 des Tragbügels 43 bis zu dessen freiem, offenen Ende 128 im Bereich eines Scheiben-Elements 37.

Die freien, offenen Enden 128 der Seitenschenkel 44 des Tragbügels 43 dienen als Linearführungen für je ein darin aufgenommenes und in deren Längsrichtung verschiebbares Steuerelement 129. Dieses ist mit einer Querbohrung 130 versehen, worin ein an dem freien Ende des Zugmittels 126 angeordnetes, beispielsweise zylindrisches Verdickungselement 131 eingreift, um eine von dem Betätigungselement 117 auf das Zugmittel 126 ausgeübte Zugkraft auf das Steuerelement 129 zu übertragen und dadurch jenes in das betreffende, offene Ende 128 eines Seitenschenkels 44 des Tragbügels 43 hinein zu ziehen. Die umgekehrte Bewegung erzeugen Federelemente 132, welche an das Steuerelement 129 gekoppelt sind und derart vorgespannt sind, dass sie bestrebt sind, jenes aus der Öffnung 128 herauszuziehen, sobald eine nachlassende Zugkraft seitens des Betätigungselements 117 dies erlaubt.

Das Steuerelement 129 wird ferner von wenigstens einem Querstift 133 durchsetzt, welcher der eigentlichen Drehverriegelung dient.

Die Scheibenelemente 37 bestehen jeweils aus einer Art Gehäuse 134, welches der Verbindung mit der Scheibe 34 dient, beispielsweise über die dortigen Schlitze 35, worin Stege 36 an dem Gehäuse 134 eingreifen können.

Das Gehäuse 134 umfasst zwei durch einen Steg 135 miteinander verbundene Platten 136, zwischen denen ein scheibenförmiges Element 137 um eine Drehachse 138 drehbar aufgenommen ist, wobei die Platten 136 des Gehäuses 134 von der Drehachse 138 lotrecht durchsetzt werden.

Das Steuerelement 129 ragt in jeder Schiebestellung teilweise in eine Art Kanal innerhalb des scheibenförmigen Elements 137 hinein und teilt dadurch jenem seine Schwenkstellung um die Drehachse 138 mit. Dabei ragt der Querstift 133 aus dem scheibenförmigen Element 137 zumindest an seiner dem gestellseitigen Adapter 34 abgewandten Seite heraus. In der betreffenden Scheibe 136 ist eine bogenförmige Vertiefung 139 eingearbeitet, welche von dem Querstift 133 durchgriffen wird. In dem Rand dieser bogenförmigen Vertiefung 139 befindet sich wenigstens eine Einrasterweiterung 140, in die der Querstift 133 bei der gewünschten Gebrauchs-Schwenkstellung hinein gleiten kann, unter dem Einfluss der Federelemente 132.

Ferner ist für den Anschluss des Spielbügels 47 an dem Scheiben-Element 37 dort ein weiteres, ringförmiges Element 141 vorgesehen, welches sich an der Außenseite der inneren Scheibe 135 - parallel zu jenem - erstreckt. Dieses ist ebenfalls verdrehbar auf der Drehachse 139 gehalten und weist an seiner Innenseite eine felgenartig umlaufende, zu der Scheibe 139 hin vorspringenden Rand 142 auf, der seinerseits an seiner radial innen liegenden Seite an einer Stelle eine nach außen gerichtete, muldenförmige Vertiefung 143 als Einrasterweiterung aufweist.

Da der innere Rand 142 einen größeren Radius aufweist als der radial äußere Rand der bogenförmigen Vertiefung 139 in der Scheibe 136, wird beim Ausheben des Querstifts 133 aus den Einrast-Vertiefungen 139, 143 zuerst der Spielbügel 47 frei, erst danach der Tragbügel 43. Umgekehrt rastet zuerst der Tragbügel 43 ein, dann der Spielbügel 47.

An den beiden Seitenschenkeln 44 des Tragbügels 43 wie auch an dessen Steg 45 wird die eigentliche Sitzmulde 48 des Aufsatzes 3 befestigt.

Die Sitzmulde 48 ist in Fig. 5 dargestellt und besteht überwiegend aus einem flexiblen Stoff, passt sich also der Form und Haltung des Kindes jeweils optimal an. Sie ist in ihrem oberen Bereich 49 an dem Steg 45 und im Bereich ihrer beiden Seitenränder 50 an je einem der beiden Seitenschenkel 44 des Tragbügels 43 festgelegt, beispielsweise indem sie lappenartige Bereiche oder Fortsätze aufweist, welche um den betreffenden Holm 44, 45 des Tragbügels 43 herum geschlungen werden und sodann mit sich selbst verbunden werden, beispielsweise mittels Druckknöpfen 51.

Wie man der Fig. 5 weiter entnehmen kann, untergliedert sich die Sitzmulde 48 in einen zentralen Mittelbereich 52 sowie in zwei seitlich daran anschließende Randbereiche 53.

Der mittlere Bereich 52 untergliedert sich in einen oberen Bereich, welcher dem Kind als Rückenlehne 54 dient, und in einen unteren Bereich, der als Sitzfläche 55 gedacht ist. Vorzugsweise ist die Sitzfläche 55 kleiner als die Rückenlehne 54, obwohl beide etwa die selbe Breite haben.

Auf Höhe des Übergangsbereichs 56 zwischen der Sitzfläche 55 und der Rückenlehne 54 können in den Randbereichen 53 jeweils zwickelförmig sich nach außen erweiternde Bereiche ausgespart sein, so dass nach Zusammennähen der Ränder des ausgeschnittenen Bereichs sich mehr oder weniger selbsttätige die Form einer Sitzmulde 48 ergibt. Die Randbereiche 53 fungieren dabei als Armlehnen oder Seitenstützen 57.

Im Mittelbereich 52 können ferner Gurte 58 zum Zurückhalten eines Kindes vorgesehen sein; beispielsweise können Schultergurte 59 an Schlitzen 60 in der Rückenlehne 54 nach vorne austreten und über ein Gurtschloss 61 mit Beckengurten 62 oder einem zentral durch den Schritt laufenden Untergurt 63 verbunden werden.

Damit das Kind nicht in der Sitzmulde wie in einer Hängematte sitzt, ist unterhalb der Sitzfläche 55 eine flächige Sitzflächenstütze 64 aus einem festen Material vorgesehen. Diese wird vorzugsweise an den in Blickrichtung des Kindes jeweils vorderen Fahrgestellstreben 5, 6 festgelegt, beispielsweise indem seitlich auskragende Fortsätze 65 in an den Fahrgestellstreben 5, 6 festgelegten Muffen od. dgl. eingesteckt oder eingesetzt werden.

Die Sitzmulde 48 liegt mit ihrer Sitzfläche 55 nur lose auf der plattenförmigen Sitzflächenstütze 64 auf. Insbesondere ist die Sitzflächenstütze 64 nicht mit dem Tragebügel 43 verbunden.

Vorne an der Vorderkante 66 der Sitzfläche 55 hängt eine Unterschenkellasche 67, vorzugsweise ebenfalls aus einem flexiblen Stoff. Diese kann an ihrer Unterseite über zwei seitliche Taschen 68 verfügen, welche sich an den Seitenkanten der Unterschenkellasche 67 entlang erstrecken und hinten offen sind, also im Bereich der Vorderkante 66.

Diese Taschen 68 dienen zur Aufnahme je einer Unterschenkelstütze 69.

Jede derartige Unterschenkelstütze 69 hat die Form eines kurzen Stabs oder Stummels, der in seinem hinteren Bereich über ein dortiges Gelenk 70 mit der festen Sitzflächenstütze 64 verbunden ist.

Sobald die Unterschenkelstützen 69 in die Taschen 68 der Unterschenkellasche 67 eingesteckt sind, bestimmen sie deren Gestalt: Sind die Unterschenkelstützen 69 etwa horizontal in Blickrichtung nach vorne gerichtet, wie in Fig. 4 zu sehen, spannt sich zwischen diesen die Unterschenkellasche 67 etwa wie ein horizontales Segel auf und kann einem kleinen Kind zur Ablage seiner Unterschenkel dienen.

Bei größeren Kindern werden die Unterschenkelstützen 69 an ihren Gelenken 70 etwa vertikal nach unten gebogen und nehmen die Unterschenkellasche 67 dabei mit. Nun kann ein größeres Kind auf dem Aufsatz 3 Platz nehmen und in der gewohnten Sitzposition die Unterschenkel nach unten stellen.

Eine weitere Besonderheit des Aufsatzes 3 ist ein Verdeck 71. Dieses besteht ebenfalls aus einem flexiblen Stoff, der auf einer Mehrzahl von rippenförmig den Sitz überspannenden Verdeckbügeln 72 aufgespannt ist.

Die Verdeckbügel 72 folgen jeweils einem U-förmigen Verlauf. Die Enden ihrer Seitenschenkel treffen sich an jeder Seite des Kinderwagens 1 an je einem Gelenk, welches an vorbereiteten Befestigungsbereichen 73 der Seitenschenkel 44 des Tragbügels 43 festlegbar sind.

Da die somit die meisten Bestandteile des Aufsatzes über den Tragbügel 43 mit der Adapter-Scheibe 37 verbunden sind, können sie bei Bedarf als ganzes abgenommen und in umgekehrter Blickrichtung wieder aufgesteckt werden.

Daneben muss nur noch die feste Sitzflächenstütze 64, welche bevorzugt mit den Unterschenkelstützen 69 zu einer Baueinheit integriert ist, demontiert und anschließend an den jeweils in Blickrichtung vorderen Fahrgestellstreben 5, 6 wieder befestigt werden.

Dabei muss allerdings das Kind vorübergehend aus dem Sitz aufstehen oder entnommen werden, da der Umbau ansonsten etwas anstrengende sein könnte. Will eine Mutter nur kurzfristig die Blickrichtung ihres Kindes umwechseln, beispielsweise weil dieses ohne Blickkontakt zur Mutter heftig schreit, so bietet der erfindungsgemäße Kinderwagen überdies die Möglichkeit, anstelle des Aufsatzes 3 den Schiebebügel 8 in eine andere Position zu schwenken, so dass nicht die Blickrichtung des Kindes, sondern die Schieberichtung der Mutter vertauscht wird.

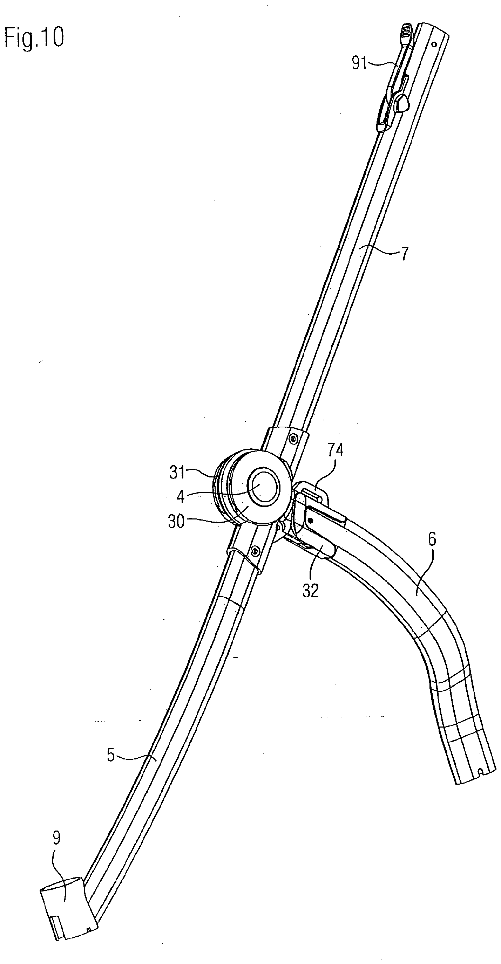

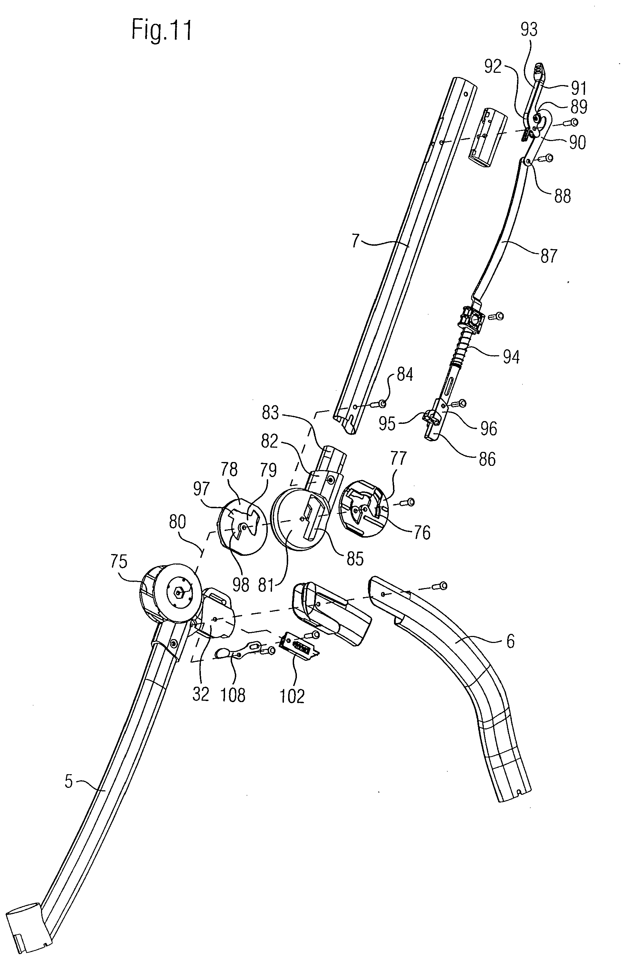

Dies leistet das erfindungsgemäße Gelenk 4. Dieses ist in den Fig. 10 ff. deutlicher dargestellt. Insbesondere aus Fig. 11 erkennt man dessen inneren Aufbau.

Bei der dargestellten Ausführungform ist das Gehäuse 28 eines Gelenks 4 an einer Strebe des Fahrgestells 2 festgelegt, in der Zeichnung an einer Vorderradstrebe 5.

An dem Gehäuse 28 erkennt man einen muffenartigen Anschluss für die Vorderradstrebe 5. Mit diesem Anschluss kann das Gehäuse 28 des Gelenks integriert sein, beispielsweise in einem gemeinsamen Arbeitsgang spritzgusstechnisch hergestellt.

Das Gehäuse 28 umfasst einen Teil der Mantelfläche 31 sowie zwei Stirnseiten 29, 30. Außerdem ist an der Mantelfläche 31 ein Fortsatz 32 zum Anlenken der Hinterradstrebe 6 angeformt. Ferner kann damit eine Sicherungsöse 74 integriert sein, womit der Kinderwagen beispielsweise in einem Zug od. dgl. mittels eines Gurtes verankert werden kann.

Wie man weiter erkennen kann, sind an den Innenseiten der beiden Stirnflächen 29, 30 jeweils rippenförmige Erhebungen 75 angeformt.

Pendants dazu in Form von rillenförmigen Vertiefungen 76 befinden sich an den Außenseiten 77 zweier innerer Gelenkplatten 78, welche von innen her an den Gehäuse-Stirnplatten 29, 30 derart verankerbar sind, dass die Rippen 75 in die Rillen 76 eingreifen und dadurch eine Relativverdrehung ausgeschlossen ist. Natürlich kann die Position der Rippen 75 und Rillen 76 auch vertauscht sein.

Wie man weiter sieht, ist in jeder Gelenkplatte 78 je eine fensterartige Ausnehmung 79 vorgesehen. Die fensterartigen Ausnehmungen 79 beider Gelenkplatten 78 sind deckungsgleich. Überhaupt sind die Gelenkplatten 78 spiegelbildlich zu einer von der Drehachse 80 des Gelenks 4 lotrecht durchsetzten Mittelebene des Gelenks 4.

Die beiden Gelenkplatten 78 sind voneinander beabstandet und nehmen zwischen sich ein weiteres, scheibenförmiges Teil 81 auf, welches über einen Anschluss 82 für einen Seitenschenkel 7 des Schiebebügels 8 verfügt, beispielsweise mit einem Fortsatz 83, der beim Zusammenstecken mit dem Schiebebügel 8 in das offene Ende eines hohlprofilförmigen Seitenschenkels 7 eingreift. Durch einen Querstift oder eine quer durch den Fortsatz 83 und den Seitenschenkel 7 hindurchgreifende Schraube 84 werden diese Teile miteinander verbunden.

Auch das scheibenförmige Teil 81 verfügt über ein zwischen seinen beiden Grundflächen hindurchgehendes Fenster 85, welches außerdem mit einem Hohlraum in dem Fortsatz 83 kommuniziert.

In dem Fenster 85 ist ein Verriegelungskörper 86 verschiebbar geführt.

Der Verriegelungskörper 86 ist an seinem dem Fortsatz 83 zugewandten Ende mit einem Gestänge 87 integriert oder verbunden, welches sich innerhalb des hohlen Seitenschenkels 7 des Schiebebügels 8 nach oben erstreckt und über ein oder mehrere Verbindungsgelenke 88, 89 und -hebel 90 mit einem Betätigungshebel 91 gekoppelt ist.

Der Betätigungshebel 91 ist seinerseits an einer quer zur Fahrtrichtung verlaufenden Schwenkachse 92 schwenkbar gelagert.

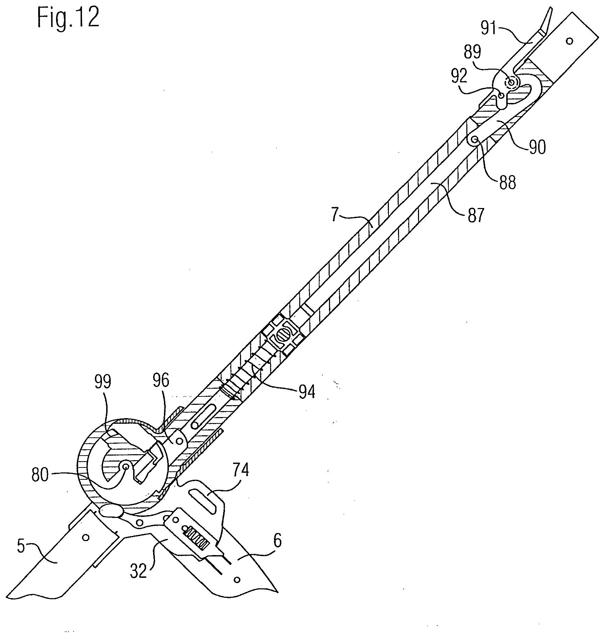

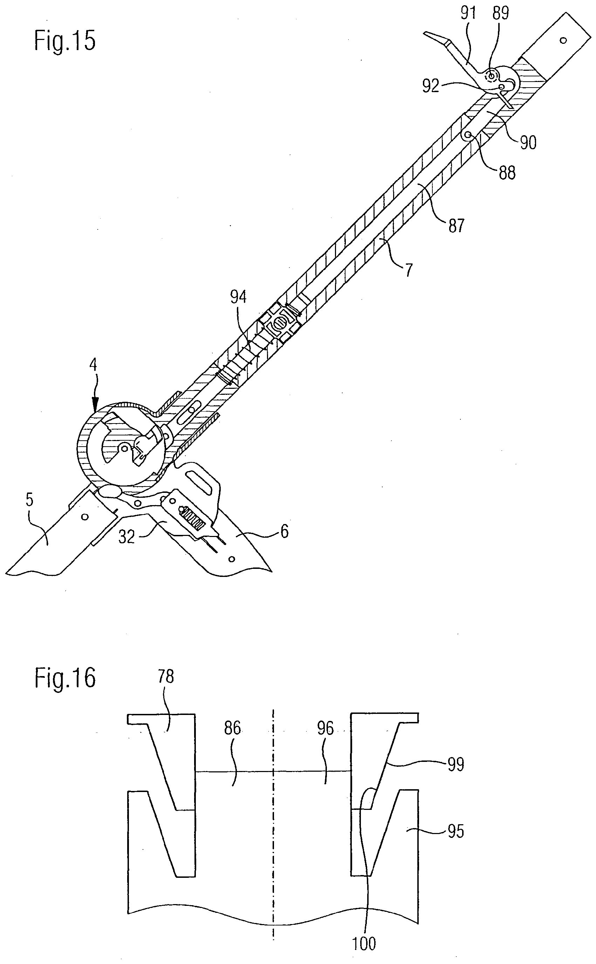

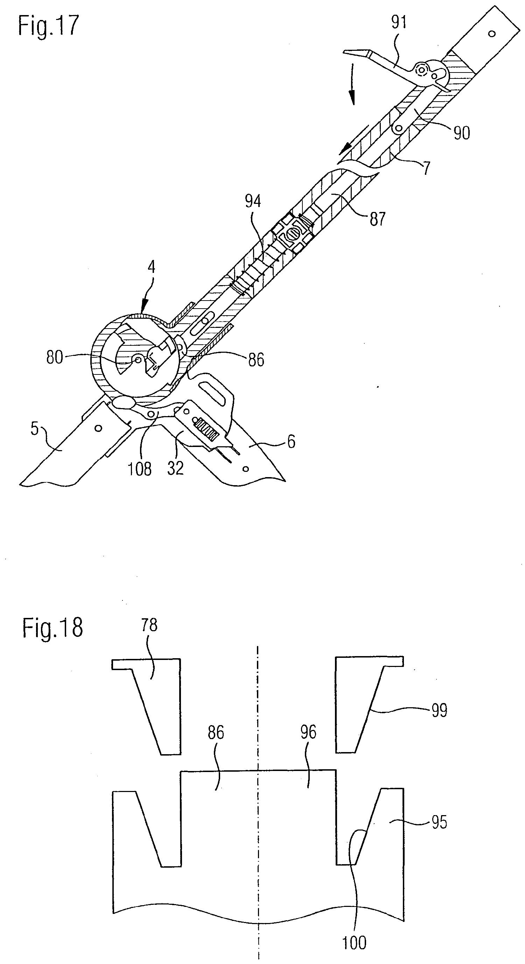

Im vorliegenden Fall handelt es sich dabei um einen einarmigen Hebel, wobei sowohl der Betätigungsgriff 93 als auch das erste Verbindungsgelenk 89 zu einem Verbindungshebel 90 an der selben Seite der Schwenkachse 92 angeordnet sind. Wird demnach der Betätigungsgriff 93 nach oben zum Griff 26 des Schiebebügels 8 hin geschwenkt, wie dies zum Beispiel in Fig. 12 dargestellt ist, so bewegt sich das Gestänge 87 und damit auch der Verriegelungskörper 86 in Richtung zu dem Griff 26 des Schiebebügels 8 hin, also nach oben. Wird dagegen der Betätigungsgriff 93 nach unten geschwenkt, wie in den Fig. 15 oder 17 zu sehen, so bewegt sich das Gestänge 87 und damit auch der Verriegelungskörper 86 zu dem Gelenk 4 hin, also nach unten.

Eine mit dem Gestänge 87 gekoppelte Feder 94, insbesondere eine jenes umgebende Schraubenfeder, stützt sich andererseits an dem Holm des Seitenschenkels 7 des Schiebebügels 8 ab und ist aufgrund einer Vorspannung bestrebt, das Gestänge 87 mitsamt dem Verriegelungshebel 86 nach oben zu drücken, sofern der Betätigungsgriff 93 dies zulässt.

Das Fenster 85 in dem scheibenförmigen Teil 81 weist eine überwiegende Längserstreckung in Richtung des Seitenschenkels 7 des Schiebebügels 8 auf und erlaubt damit dem Verriegelungskörper 86 unter dem Einfluss der Feder 94 und des Betätigungsgriffs 93, sich innerhalb des Fensters 85 in Längsrichtung des Gestänges 87 zu verschieben. Eine Verdrehung um die Drehachse 80 des Gelenks 4 ist dagegen nicht oder kaum möglich.

Anders verhält es sich mit den Fenstern 79 in den beiden Gelenkplatten 78. Diese haben überwiegend eine bogenförmige Gestalt bzw. einen kreisbogenförmigen zu der Drehachse 80 des Gelenks 4 konzentrischen Verlauf. Darin finden seitlich auskragende Bereiche 95 des Verriegelungskörpers 86 Platz, während dessen Korpus 96 sich überwiegend oder ausschließlich innerhalb des Fensters 85 befindet. Dieses Fenster 85 übernimmt daher eine Führungsfunktion für den Verriegelungskörper 86 im Rahmen des zentralen, scheibenförmigen Gelenkteils 81.

Demgegenüber bestimmen die Fenster 79 in den beiden Gelenkplatten 78, ob sich der Verriegelungskörper 86 gemeinsam mit dem scheibenförmigen Gelenkteil 81 in Umfangsrichtung der bogenförmigen Fenster 79 verstellen lässt.

Denn die bogenförmigen Fenster 79 verfügen neben rein bogenförmigen Randabschnitten auch über ein oder vorzugsweise zwei radiale Erweiterungen 97, welche sich unter verschiedenen Winkeln von dem bogenförmigen Fensterbereich 98 nach außen erstrecken.

Befinden sich die seitlich auskragenden Bereiche 95 des Verriegelungskörpers 86 innerhalb einer solchen rdialen Erweiterung 97, so ist eine Verstellung des Veriegelungskörpers 86 und damit des scheibenförmigen Gelenkteils 82 und des gesamten Schiebebügels 8 in Umfangsrichtung um die Drehachse 80 nicht möglich. Greifen die seitlich auskragenden Bereiche 95 des Verriegelungskörpers 86 dagegen nicht in irgendewelche radialen Erweiterungen 97 ein, sondern befinden sich in dem bogenförmigen Fensterbereich 98, ist dagegen eine Bewegung innerhalb diese Fensterbereichs 98 und damit ein Verschwenken des Schiebebügels 8 möglich.

Die seitlichen Fortsätze 95 werden zusammen mit dem Verriegelungskörper 86 selbst von der Feder 94 nach oben bewegt, wenn sie genau einer radialen Erweiterung 97 des Fensters 79 gegenüber stehen. Dies ist eine automatische Einrastfunktion, welche einer Bedienperson anzeigt, dass nun dir richtige Stellung des Schiebebügels 8 gefunden ist.

Allerdings hat die Feder 94 nicht genügend Kraft, um das Gelenk 4 in dieser Position steif zu blockieren. Dazu ist vielmehr erforderlich, dass nun die Bedienperson den Betätigungshebel 91 manuell ganz nach oben zieht. Damit wird der Verrigelungskörper 86 im Rahmen seines Speilraums innerhalb der Fenster 79, 85 ganz nach oben bzw. - im Hinblick auf die Drehachse 80 - ganz nach radial außen gezogen.

Dabei werden die seitlich auskragenden Bereiche 95 des Verriegelungskörpers 86 vollständig in die betreffende radiale Erweiterung 97 des Fensters 79 hinein bewegt.

Damit hierbei nicht durch Fertigungstoleranzen des Gestänges 86, 87, 90 gegenüber dem Holm 7 die auskragenden Bereiche 95 des Verriegelungskörpers 86 zu weit in diese Erweiterungen 97 des Fensters 79 hinein bewegt werden, wodurch die seitlichen Gelenklatten 78 beschädigt oder zerstört werden könnten, weist wenigstens eine Stange 87 des Gestänges 86, 87, 90 nicht eine ebene Gestalt auf, sondern folgt einem leicht gewölbten, bogenförmigen Verlauf, wie dies in Fig. 11 zu sehen ist. Dadurch erhält das Gestänge 86, 87, 90 in seiner Längsrichtung eine Art Federungsmöglichkeit, welche es erlaubt, dass das vorderste bzw. unterste Teil 86 mitsamt seiner seitlich auskragenden Bereiche 95 in dem gewünschten Arretierungzustand verharren kann, selbst wenn der Betätigungshebel 93 noch nicht seine Endposition erreicht hat. Den Längenunterschied fängt die gewölbte und federnd biegsame Stange 87 des Gestänges 86, 87, 90 auf, indem diese sich nötigenfalls gerade biegt und dadurch länger wird. Dadurch erhöht sich zwar die zwischen den auskragenden Bereichen 95 des Verrielungskörpers 86 und den Erweiterungen 97 der Fenster 79 in den seitlichen Scheiben 78 wirkende Klemmkraft, jedoch in einem nur mäßigen Umfang, nämlich um die Federkraft der elastisch verbogenen Stange 87. Diesen mäßigen Kraftanstieg kann die Mechanik ohne Beschädigung oder gar Zerstörung ertragen. Die gebogene Stange 87 kann ähnlich wie ein "(" oder wie ein ")" nach innen oder nach außen durchgebogen sein, oder sogar ähnlich einem "S" einen vorzugsweise etwa mittigen Wendepunkt aufweisen, mit zwei daran anschließenden Durchbiegungen in entgegengesetzten Richtungen.

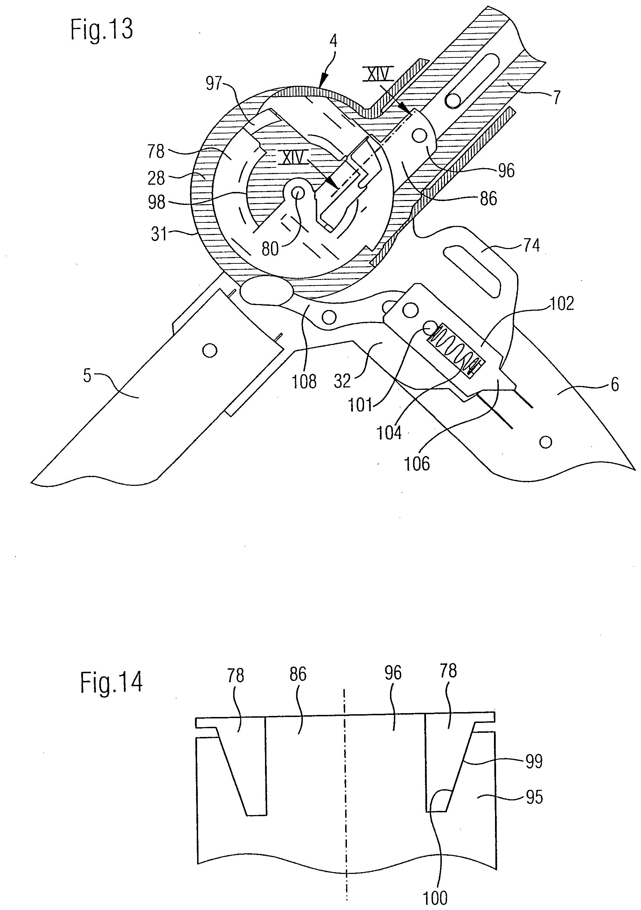

Wie die Fig. 14, 16 und 18 zeigen, finden die radial auskragenden Bereiche 95 dabei sich allmählich verengende Schlitzquerschnitte vor und gelangen daher schließlich zur Anlage an geneigt verlaufenden Kontaktflächen 99 am Rand einer Erweiterung 97 eines Fensters 79 im Bereich des freien Endes der radialen Erweiterung 97. Durch manuelles, kräftiges Anziehen werden dadurch die beiden Gelenplatten 78 reibschlüssig und damit maximal steif an Pendants 100 zu den Kontaktflächen 99 im Bereich der seitlich auskragenden Bereiche 95 gezogen. Das Gelenk ist eingerastet und verriegelt, wie in den Fig. 13 und 14 dargestellt. Dieser Zustand bleibt nicht zuletzt auch deshlab aufrechterhalten, weil nun der Betätigungsgriff 93 gänzlich nach oben geschwenkt ist, so dass nun das oberste Verbindungsgelenk 89 und die Schwenkachse 92 des Betätigungshebels 91 etwa in Längsrichtung des Gestänges 87 hintereinander liegen. Dadurch wird der Betätigungshebel 91 gegenüber jeglicher Zug- oder Druckkraft innerhalb des Gestänges 87 blockiert.

Man erkennt nun in Fig. 15 und 16, dass nach dem Entriegeln zwar die Kontaktflächen 99 und 100 voneinander gelöst sind, aber unter dem Einfluss der Feder 94 bleibt - bei etwa um 90° gegenüber der Arretierungsposition herabgeschwenktem Betätigungsgriff 93 - noch immer die seitlich auskragenden bereiche 95 des Verriegelungskörpers 86 die radialen Erweiterungen 97 der Fenster 79 eingreifen und also ein Verschwenken des Schiebebügels 8 noch immer nicht möglich ist. Da in diesem Zustand die das Verbindungslinie zwischen dem obersten Verbindungsgelenk 89 und der Schwenkachse 92 des Betätigungshebels 91 etwa quer zur Längsrichtung des Gestänges 87 orientiert ist, gibt der Betätigungshebel 91 jeder Zug- oder Druckbeanspruchung innerhalb des Gestänges 87 nach und überlässt also der Feder 94 die Steuerung des Verriegelungskörpers 86.

Wird nun - wie dies in den Fig. 17 und 18 zu sehen ist - der Betätigungsgriff 93 manuell herabgedrückt, so wird die Feder 94 überwunden und das Gestänge 87 schiebt den Verriegelungskörper 86 weiter in das Gelenk 4 hinein, bis die seitlich auskragenden Bereiche 95 des Verriegelungskörpers 86 vollständig aus der betreffenden radialen Erweiterung 97 herausgeschoben sind.

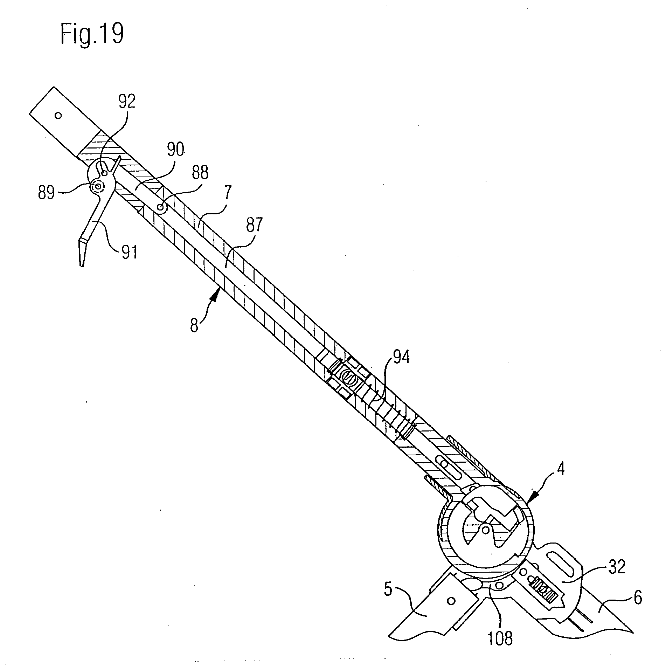

Nun ist der Verriegelungskörper 86 samt seiner seitlich auskragenden Bereiche 95 innerhalb des bogenförmigen Fensterbereichs 98 frei beweglich und der Schiebebügel 8 kann von der Position nach Fig. 17 beispielsweise in die Position nach Fig. 19 verschwenkt werden, wo wiederum ein Einrasten an einer anderen radialen Erweiterung 97 möglich ist.

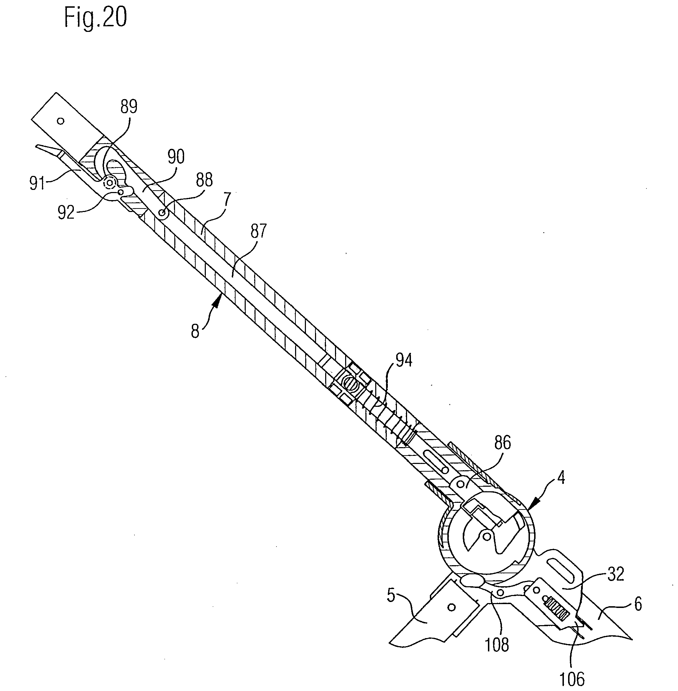

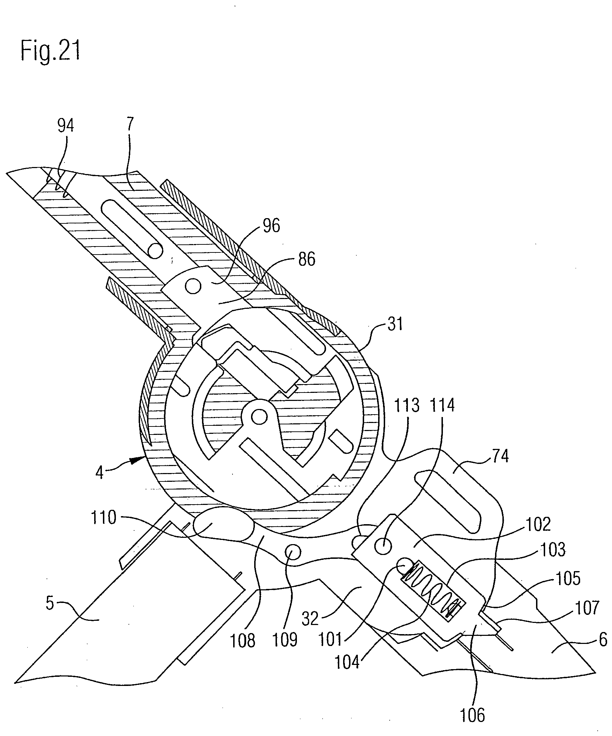

Wird diese Position des Schiebebügels 8 verriegelt, indem der Betätigungsgriff 93 ganz nach oben gezogen wird, wie dies in Fig. 20 und 21 zu sehen ist, so kann der Kinderwagen 1 nun in umgekehrter Richtung geschoben werden.

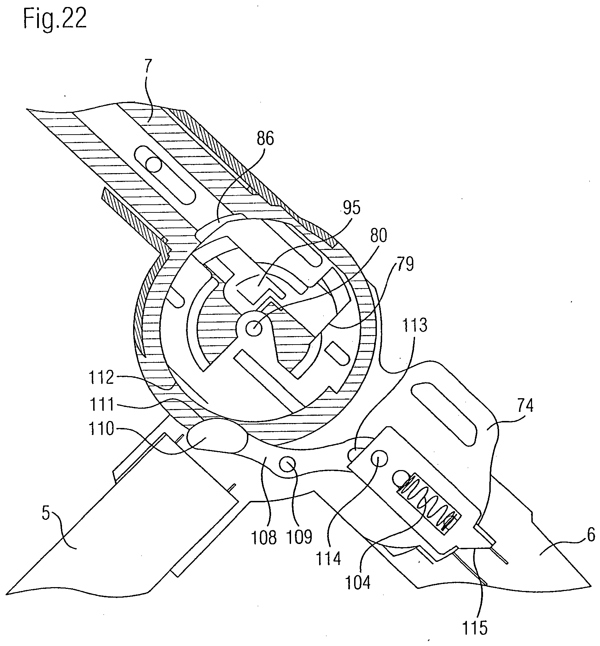

Soll der Kinderwagen 1 dagegen zusammengelegt werden, so wird zunächst der Schiebebügel 8 wieder entriegelt, wie in Fig. 22 zu sehen ist, und schließlich noch manuell aus der betreffenden radialen Fensetererweiterung 97 ausgerastet, durch ein weiteres manuelles Herabschwenken des Betätigungsgriffs 93 ähnlich wie in Fig. 17 zu sehen.

Sind dadurch die seitlich auskragenden Bereiche 95 des Verriegelungskörpers 86 vollständig aus den radialen Erweiterungen 97 herausgeschoben, so kann der Schiebebügel 8 weiter geschwenkt werden, bis er schließlich nahezu parallel zu der benachbarten Strebe 5, 6 des Fahrgestells 2 liegt, vorzugsweise zu der betreffenden Vorderradstrebe 5.

Will man den Kinderwagen 1 vollkommen zusammenlegen, ist nun noch die Hinterradstrebe 6 an die Vorderradstrebe 5 heranzuschwenken. Dazu muss die Hinterradstrebe 6 jedoch zunächst entriegelt werden. Dies leistet eine weitgehend selbsttätige Steuerung, deren Wirkungsweise den Fig. 21 bis 24 zu entnehmen ist:
Die gegenüber dem Gehäuse 28 des Gelenks 4 verschwenkbare Strebe 5, 6, vorzugsweise die Hinterradstrebe 6, ist an einer exzentrisch zu der ersten Drehachse 80 angeordneten, zweiten Drehachse 101 schwenkbar gelagert. Diese zweite Drehachse 101 befindet sich innerhalb des von der Mantelfläche 31 des Gelenks 3 seitlich auskragenden Fortsatzes 32. Je nach Ausführungform kann sich die betreffende Stebe 5, 6 zwischen äußeren Platten des Fortsatzes 32 befinden, oder innerhalb einer gehäuseseitig vorgesehenen Gabel des Fortsatzes 32.

Gesteuert wird das Ein- und Ausrasten der betreffenden Strebe 5, 6 durch einen zweiten Verriegelungskörper 102, der sich innerhalb des Gehäusefortsatzes 32 befindet.

Der zweite Verriegelungskörper 102 weist ein Langloch 103 auf, welches von der zweiten Drehachse 101 durchgriffen wird. Damit ist der Verriegelungskörper 102 begrenzt beweglich geführt. Innerhalb dieses Langlochs 103 ist eine zweite Feder 104 angeordnet, die als Druckfeder ausgebildet ist und/oder als Spiralfeder. Diese zweite Feder 104 stützt sich einerseits auf der zweiten Drehachse 101 ab, andererseits an dem davon entfernten Ende des Langlochs 103. Da sich die zweite Feder 104 von der ersten Drehachse 80 aus gesehen jenseits der zweiten Drehachse 101 befindet, ist sie bestrebt, den zweiten Verriegelungskörper 102 von der ersten Drehachse 80 weg zu drücken, in Richtung zu der betreffenden Strebe 5, 6 des Fahrgestells 2.

An der peripheren, der ersten Drehachse 80 abgewandten Stirnseite 105 verfügt der zweite Verrigelungskörper 102 über einen Vorsprung 106, der in der Lage ist, in eine rückwärtige Ausnehmung 107 der verschwenkbaren Strebe 5, 6 einzutauchen und diese dadurch zu arretieren.

Die zweite Feder 104 drückt den Verriegelungskörper 102 normalerweise gegen die Rückseite der verschwenkbaren Strebe 5, 6, so dass der Vorsprung 106 in der Ausnehmung 107 bleibt und der eingerastete Zustand erhalten bleibt.

Die Entriegelungsbewegung wird von der Bewegung des Zusammenklappens des Schiebebügels 8 abgeleitet. Dazu dient ein wippenförmiger, zweiarmiger Hebel 108, der innerhalb des Gehäuses 28 des Gelenks 4 gelagert ist, und zwar um eine zu der ersten und/oder zweiten Drehachse 80, 101 parallele Schwenkachse 109. Diese Schwenkachse durchsetzt das Gehäuse 28 des Gelenks quer und zwar etwa in demjenigen Bereich, wo der Fortsatz 32 von der Mantelfläche 31 des Gehäuses 28 des Gelenks 4 abzweigt.

Ein Ende dieses zweiarmigen Hebels 108 ist als Nocken 110 mit einer bereichsweise konvex gewölbten Oberfläche 111 ausgestaltet. Dabei ist der konvex gewölbte Oberflächenbereich der ersten Drehachse 80 zugewandt, und dieser Bereich 111 findet an dem Umfang des zentralen, scheibenförmigen Teils 81 eine Anlauffläche 112 mit variablem Abstand zu der ersten Drehachse 80.

Das andere Ende des zweiarmigen Hebels 108 greift in eine Vertiefung im rückwärtigen Ende des zweiten Verriegelungskörpers ein und wird von einem Langloch 113 durchsetzt, das ebenfalls zumindest teilweise in diese Vertiefung eintaucht. Diese Vertiefung wird von einem Stift 114 quer durchsetzt, und dieser Stift 114 durchgreift auch das Langloch 113 des zweiarmigen Hebels 108.

Der wippenförmige Hebel ist derart bemessen, dass er bei aufgeklapptem Schiebebügel 8 einen in radialer Richtung zurückweichenden Bereich der Anlauffläche 112 vorfindet und also unter dem Einfluss der zweiten Feder 104 mit seinem Nocken 110 radial nach innen schwenken kann, während dadurch der zweite Verriegelungskörper 102 radial nach außen bzw. nach unten gestoßen wird, mit seinem Vorspurng 106 in die rückwärtige Ausnehmung 107 der betreffenden Strebe 5, 6 hinein. Diese Strebe ist und bleibt eingerastet.

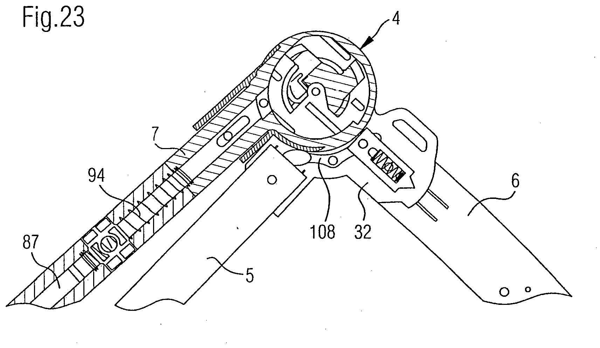

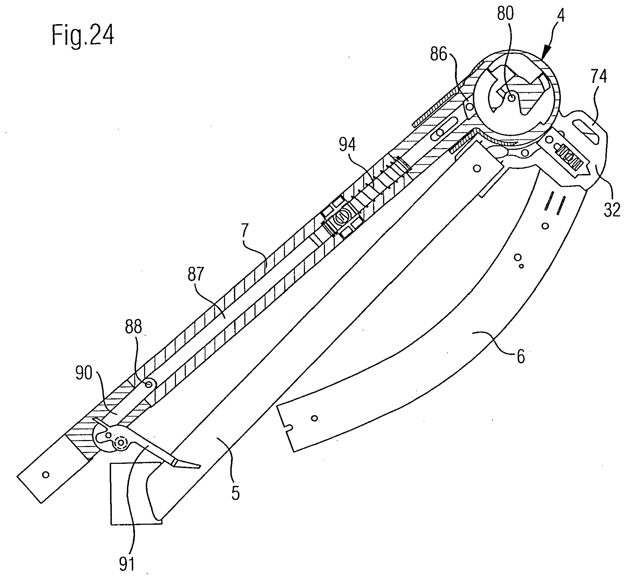

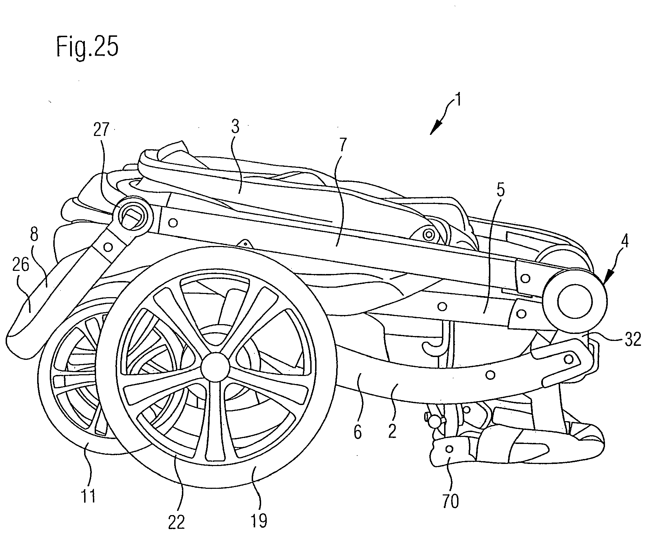

Wird nun der Schiebebügel 8 ganz herabgeschwenkt, wie in Fig. 23 zu sehen, so trifft der Nocken 110 allmählich auf einen radial weiter vortretenden Teil der Anlauffläche 112, wodurch der Nockenarm des wippenförmigen Hebels 108 radial nach außen geschwenkt wird. Dabei wird der andere Arm gleichzeitig radial nach innen geschwenkt, also zu der ersten Drehachse 80 hin und von der zweiten Drehachse 101 weg. Dadurch zieht dieser Hebel den in sein Langloch 113 eingreifenden Stift 114 und damit den gesamten zweiten Verriegelungskörper 102 von der betreffenden, verschwenkbaren Strebe 5, 6 zurück - der Vorsprung 106 verlässt die Ausnehmung 107 und die verschwenkbare Strebe 5, 6 kann an die gehäusefeste Strebe 5, 6 herangeschwenkt werden. Das Endergebnis, nämlich den vollständig zusammengefalteten Zustand, ist den Fig. 24 und 25 zu entnehmen.

Damit der Ausklappvorgang auch möglichst selbsttätig abläuft, ist an dem Vorsprung 106 die der Zusammenklapprichtung der betreffenden verschwenkbaren Strebe 5, 6 zugewandte Kante 115 abgeschrägt, weicht also mit zunehmender Einklapprichtung radial zur zweiten Drehachse 101 hin zurück. Wird die verschwenkbare Strebe 5, 6 wieder ausgeklappt, so streift dieser abgeschrägte Kantenbereich 115 an der Rückseite der ausklappenden Strebe 5, 6 entlang und drückt den zweiten Verriegelungskörper 102 jeweils so weit als nötig nach innen, bis der Vorsprung 106 vollständig der Ausnehmung 108 gegenüber steht und schließlich aufgrund der Kraft der zweiten Feder 103 in diese einschnappen kann.

**Bezugszeichenliste**

| | | | |
|---|---|---|---|
| 1 | Kinderwagen | 26 | Griff |
| 2 | Fahrgestell | 27 | Gelenk |
| 3 | Aufsatz | 28 | Gehäuse |
| 4 | Gelenk | 29 | innere Stirnseite |
| 5 | Vorderradstrebe | 30 | äußere Stirnseite |
| 6 | Hinterradstrebe | 31 | Mantelfläche |
| 7 | Seitenschenkel | 32 | Fortsatz |
| 8 | Schiebebügel | 33 | Anschluss |
| 9 | Drehgelenk | 34 | Scheibe |
| 10 | gabelförmige Aufnahme | 35 | Schlitz |
| 11 | Vorderrad | 36 | Steg |
| 12 | Speiche | 37 | Scheibe |
| 13 | Radnabe | 38 | Vertiefung |
| 14 | Felge | 39 | Fortsatz |
| 15 | Bereifung | 40 | Zunge |
| 16 | Strebe | 41 | Lasche |
| 17 | Transportmatte | 42 | Mantelfläche |
| 18 | Strebe | 43 | Tragbügel |
| 19 | Hinterrad | 44 | Seitenschenkel |
| 20 | Radnabe | 45 | Steg |
| 21 | Speiche | 46 | Beckenbügel |
| 22 | Felge | 47 | Hülse |
| 23 | Bereifung | 48 | Sitzmulde |
| 24 | Achse | 49 | oberer Bereich |
| 25 | Bowdenzug | 50 | Seitenrand |
| 51 | Druckknopf | 76 | rillenförmige Vertiefung |
| 52 | Mittelbereich | 77 | Außenseite |
| 53 | Randbereich | 78 | Gelenkplatte |
| 54 | Rückenlehne | 79 | Fenster |
| 55 | Sitzfläche | 80 | Drehachse |
| 56 | Übergangsbereich | 81 | scheibenförmiges Teil |
| 57 | Seitenstütze | 82 | Anschluss |
| 58 | Gurt | 83 | Fortsatz |
| 59 | Schultergurt | 84 | Schraube |
| 60 | Schlitz | 85 | Fenster |
| 61 | Gurtschloss | 86 | Verriegelungskörper |
| 62 | Beckengurt | 87 | Gestänge |
| 63 | Untergurt | 88 | Verbindungsgelenk |
| 64 | Sitzflächenstütze | 89 | Verbindungsgelenk |
| 65 | Fortsatz | 90 | Verbindungshebel |
| 66 | Vorderkante | 91 | Betätigungshebel |
| 67 | Unterschenkellasche | 92 | Schwenkachse |
| 68 | Tasche | 93 | Betätigungsgriff |
| 69 | Unterschenkelstütze | 94 | Feder |
| 70 | Gelenk | 95 | Bereich |
| 71 | Verdeck | 96 | Korpus |
| 72 | Verdeckbügel | 97 | Erweiterung |
| 73 | Befestigungsbereich | 98 | bogenförmiger Bereich |
| 74 | Sicherungsöse | 99 | Kontaktfläche |
| 75 | rippenförmige Erhebung | 100 | Pendant-Kontaktfläche |
| 101 | zweite Drehachse | 126 | Zugmittel |
| 102 | zweiter Verriegelungskörper | 127 | Öse |
| 103 | Langloch | 128 | Öffnung |
| 104 | zweite Feder | 129 | Steuerelement |
| 105 | Stirnseite | 130 | Querbohrung |
| 106 | Vorsprung | 131 | Verdickungselement |
| 107 | Ausnehmung | 132 | Federelement |
| 108 | zweiarmiger Hebel | 133 | Querstift |
| 109 | Schwenkachse | 134 | Gehäuse |
| 110 | Nocken | 135 | Steg |
| 111 | konvexe Oberfläche | 136 | Platte |
| 112 | Anlauffläche | 137 | scheibenförmiges Element |
| 113 | Langloch | 138 | Drehachse |
| 114 | Stift | 139 | bogenförmige Vertiefung |
| 115 | abgeschrägte Kante | 140 | Einrasterweiterung |
| 116 | Verriegelungsmechanik | 141 | ringförmiges Element |
| 117 | Betätigungselement | 142 | Rand |
| 118 | Scheitel | 143 | muldenförmige Vertiefung |
| 119 | Hülse | | |
| 120 | Lasche | | |
| 121 | vertiefter Bereich | | |
| 122 | Innenseite | | |
| 123 | Halbschale | | |
| 124 | Vertiefung | | |
| 125 | Stift | | |

## Patentansprüche

1. Kinderwagen (1) mit einem Fahrgestell (2), umfassend seitliche Gelenkverbindungen (4) mit Anschlüssen für Streben des Fahrgestells (2) in Form einer Vorderradstrebe (5) und/oder einer Hinterradstrebe (6) sowie für einen Schenkel (7) eines Schiebebügels (8), wobei
a) bei einer vollständig ausgeklappten Fahrgestellstrebe. (5,6) zu deren Verriegelung ein Verriegelungskörper (102) in eine Einrastausnehmung (107) hineingleiten kann,
**dadurch gekennzeichnet, dass**
b) an einem mit dem Anschluss für einen Schenkel (7) des Schiebebügels (8) drehfest verbundenen Teil der Gelenkverbindung (4) eine Anlauffläche (112) für einen Nocken (110) vorgesehen ist, welcher mit dem Verriegelungskörper (102) oder mit einem in der Einrastausnehmung (107) geführten Teil verbunden oder gekoppelt ist, um jenen (jenes) in etwa radialer Richtung der betreffenden Gelenkverbindung (4) zu steuern,
c) wobei sich wenigstens ein Koppelelement, nämlich der ggf. in seiner Bewegungsrichtung vorgespannte Verriegelungskörper (102) oder die Einrastausnehmung (107), an der Fahrgestellstrebe (5,6) befindet, während wenigstens ein anderes, damit zwecks Verriegelung der vollständig ausgeklappten, Fahrgestellstrebe (5,6) formschlüssig zusammenwirkendes Koppelelement an einem Teil der Gelenkverbindung (4) angeordnet ist, insbesondere an deren Gehäuse (28) oder an einem Fortsatz (32) derselben,
d) und wobei die Schwenkachse (101) der nicht mit dem Gehäuse (28) der Gelenkverbindung (4) starr verbundenen Fahrgestellstrebe (5,6) exzentrisch zu der Schwenkachse (80) für den Schenkel (7) des Schiebebügels (8) angeordnet ist.

2. Kinderwagen (1) nach Anspruch 1, **dadurch gekennzeichnet, dass** der Verrigelungskörper (102) in dem Gehäuse (28) der Gelenkverbindung (4) oder in einem Fortsatz (32) desselben oder in der Fahrgestellstrebe (5,6) in einer Richtung überwiegend radial zu der Schwenkachse (80) des Schiebebügels (8) verschiebbar geführt oder gelagert ist und bei vollständig ausgeklappter Position der gegenüber dem Gehäuse (28) der Gelenkverbindung (4) verschwenkbaren Fahrgestellstrebe (5,6) eine Einrastausnehmung (107) oder -vertiefung vorfindet, in die er zur Verriegelung der Fahrgestellstrebe (5,6) hineingleiten kann, oder welche er für ein abgefedertes Teil an der Fahrgestellstrebe (5,6) wahlweise frei gibt oder verschließt.

3. Kinderwagen (1) nach Anspruch 1 oder 2, **dadurch gekennzeichnet, dass** eine Vorderradstrebe (5), eine Hinterradstrebe (6) und/oder ein Schenkel (7) des Schiebebügels (8) in einer gemeinsamen Ebene liegen.

4. Kinderwagen (1) nach einem der vorhergehenden Ansprüche, **dadurch gekennzeichnet, dass** der Verriegelungskörper (102) a) innerhalb der von den beiden Schwenkachsen (80,101) aufgespannten Ebene verschiebbar geführt ist, und/oder b) ein Langloch (103) aufweist, durch welches vorzugsweise die Drehachse (101) für die nicht starr mit dem Gehäuse (28) der Gelenkverbindung (4) und auch nicht mit einem Fortsatz (32) desselben verbundene Fahrgestellstrebe (5,6) hindurchgeführt ist.

5. Kinderwagen (1) nach einem der vorhergehenden Ansprüche, **dadurch gekennzeichnet, dass** der Verriegelungskörper (102) durch eine Feder (104) vorgespannt ist, insbesondere in Richtung zu der ausgeklappten, nicht starr mit dem Gehäuse (28) der Gelenkverbindung (4) und auch nicht mit einem Fortsatz (32) desselben verbundenen Fahrgestellstrebe (5,6) hin, vorzugsweise wobei die Feder (104)
a) als Druckfeder ausgebildet ist und/oder als Spiralfeder, und/oder
b) innerhalb des Langlochs (103) des Verriegelungskörpers (102) angeordnet ist, derart, dass ihre Federkraft parallel zu der Längsrichtung des Langlochs (103) gerichtet ist, und sich vorzugsweise mit einem Ende auf der Drehachse (101) für die nicht starr mit dem Gehäuse (28) der Gelenkverbindung (4) und auch nicht mit einem Fortsatz (32) desselben verbundene Fahrgestellstrebe (5,6) abstützt, mit ihrem anderen Ende dagegen vorzugsweise an der Innenseite eines Endes des Langlochs (103).

6. Kinderwagen (1) nach einem der vorhergehenden Ansprüche, **dadurch gekennzeichnet, dass** der Nocken (110)
a) eine konvex gewölbte Kontaktfläche (111) zur Anlage an der Anlauffläche (112) des mit dem Anschluss für einen Schenkel (7) des Schiebebügels (8) drehfest verbundenen Teils der Gelenkverbindung (4) aufweist, und/oder
b) derart mit dem Verriegelungskörper (102) gekoppelt ist, dass er diesen aus seiner Verriegelungsstellung innerhalb der nicht starr mit dem Gehäuse (28) der (4) Gelenkverbindung verbundenen Fahrgestellstrebe (5,6) ausheben kann.

7. Kinderwagen (1) nach einem der vorhergehenden Ansprüche, **gekennzeichnet durch** einen schwenkbar gelagerten, zweiarmigen Hebel (108) zur Koppelung des Nockens (110) mit dem Verriegelungskörper (102), wobei ein Arm des Hebels (108) mit dem Nocken (110) und sein anderer Arm mit dem Verriegelungskörper (102) verbunden und/oder gekoppelt ist, wobei vorzugsweise die Schwenkachse (109) des zweiarmigen Hebels (108) parallel zu der Schwenkachse (80) für den Anschluss des Schiebebügels (8) und/oder parallel zu der Schwenkachse (101) für den Anschluss der nicht mit dem Gehäuse (28) verbundenen Fahrgestellstrebe (5,6) verläuft.

8. Kinderwagen (1) nach Anspruch 7, **dadurch gekennzeichnet, dass** der zweiarmige Hebel (108) als Wippe ausgebildet ist, deren beide Arme einen vorzugsweise stumpfen Winkel miteinander einschließen, wobei vorzugsweise die Kontaktfläche (111) des Nockens (110) zur Anlage an der Anlauffläche (112) des mit dem Anschluss für einen Schenkel (7) des Schiebebügels (8) drehfest verbundenen Teils der Gelenkverbindung (4) an der stumpfwinkligen Innenseite des wippenförmigen Hebels (108) angeordnet ist.

9. Kinderwagen (1) nach einem der Ansprüche 7 oder 8, **dadurch gekennzeichnet, dass** der mit dem Verriegelungskörper (102) gekoppelte Arm des zweiarmigen Hebels (108) einen Bereich des oder an dem Verriegelungskörper(s)'(102) umgreift, um diesen in Richtung zu der Schwenkachse (80) des Schiebebügels (8) zurückziehen zu können.

10. Kinderwagen (1) nach einem der vorhergehenden Ansprüche, **dadurch gekennzeichnet, dass** der mit dem Verriegelungskörper (102) gekoppelte Arm des zweiarmigen Hebels (108) ein Langloch (113) aufweist, durch welches ein Stift (114) des Verriegelungskörpers (102) hindurch geführt ist, welcher quer zur Längs- und/oder Bewegungsrichtung des Verriegelungskörpers (102) verläuft, wobei vorzugsweise die Längsrichtung des Langlochs (113) in dem zweiarmigen Hebel (108) an dessen Schwenkachse (109) vorbeiläuft, insbesondere im Bereich von dessen Innenseite.

11. Kinderwagen (1) nach Anspruch 10, **dadurch gekennzeichnet, dass** der von dem Langloch (113) des zweiarmigen Hebels (108) umgriffene Stift (114) des Verriegelungskörpers (102) parallel zu der Schwenkachse (109) des zweiarmigen Hebels (108) verläuft und/oder parallel zu der Schwenkachse (80) für den Anschluss des Schiebebügels (8) und/oder parallel zu der Schwenkachse (101) für den Anschluss der gegenüber dem Gehäuse (28) der Gelenkverbindung (4) verschwenkbaren Fahrgestellstrebe (5,6).

12. Kinderwagen (1) nach einem der Ansprüche 10 oder 11, **dadurch gekennzeichnet, dass** für den zweiarmigen Hebel (108) in der, der betreffenden Fahrgestellstrebe (5,6) abgewandten Rückseite des Verriegelungskörpers (102) eine Nut oder Vertiefung vorgesehen ist, welche von einem Stift (114) des Verriegelungskörpers (102) durchgriffen wird, der auch das Langloch (113) des zweiarmigen Hebels (108) durchgreift.

13. Kinderwagen (1) nach einem der vorhergehenden Ansprüche, **dadurch gekennzeichnet, dass** an der, der betreffenden Fahrgestellstrebe (5,6) zugewandten Vorderseite des Verriegelungskörpers (102) eine schräge, gegenüber der Längsrichtung des Verriegelungskörpers (102) geneigte Anlauffläche (115) vorgesehen ist, welche beim Ausschwenken der betreffenden Fahrgestellstrebe (5,6) an einer Kante der Einrastvertiefung (107) entlangläuft und von dieser zusammen mit dem Verriegelungskörper (102) vorübergehend zurückgeschoben wird, um ein vollständiges Ausklappen der betreffenden Fahrgestellstrebe (5,6) zu ermöglichen.

14. Kinderwagen (1) nach einem der vorhergehenden Ansprüche, **dadurch gekennzeichnet, dass** im Bereich der, der betreffenden Fahrgestellstrebe (5,6) zugewandten Vorderseite des Verriegelungskörpers (102) wenigstens einer zur Längsachse oder Bewegungsrichtung des Verriegelungskörpers (102) parallelen Flanke vorgesehen ist, die beim Einrasten der betreffenden Fahrgestellstrebe (5,6) hinter eine Kante der Einrastvertiefung (107) greift und ein Einklappen der betreffenden Fahrgestellstrebe (5,6) verhindert, solange der Verriegelungskörper (102) ausgefahren ist.

15. Kinderwagen (1) nach einem der vorhergehenden Ansprüche, **dadurch gekennzeichnet, dass** zum Lösen der Arretierung einer Gelenkverbindung (4) eine Wippe (108) vorgesehen ist, die gegen wenigstens ein Federelement (104) arbeitet.

## Claims

1. A baby carriage (1) with a chassis (2), comprising lateral articulated joints (4), each having connections for struts of the chassis in the form of a front wheel strut (5) and/or a rear wheel strut (6), as well as for a leg (7) of a push bar (8),
a) wherein a locking body (102) is allowed to slide into a lock-in recess (107) in case of a strut (5,6) of the chassis being completely folded out,
**characterized in that**
b) a thrust surface (112) for a cam (110) is provided at a part of the articulation joint (4), which is linked in a non-twistable fashion to a connection for a leg (7) of the push bar (8), which cam (110) is connected or coupled to the locking body (102) or to a part guided within the lock-in recess (107), in order to control that in radial direction of the regarding articulation joint (4),
c) wherein at least one coupling element, namely the locking body (102) biased in its direction of movement or the lock-in recess (107), is located at the strut (5,6) of the chassis, while at least another coupling element, which is in engagement with the first coupling element in order to lock the strut (5,6) of the chassis, is located at a part of the articulation joint (4), especially at its housing (28) or at an extension (32) thereof,
d) and wherein the pivot axis (101) of that strut (5,6) of the chassis, which is not rigidly connected to the housing (28) of the articulation joint (4), is arranged excentrically to the pivot axis (80) for the leg (7) of the push bar (8).

2. The baby carriage (1) according to claim 1, **characterized in that** the locking body (102) is guided or mounted within the housing (28) of the articulation joint (4) or in an extension (32) thereof or in a strut (5,6) of the chassis, movably in a direction predominantly radial to the pivot axis (80) of the push bar (8), and, in case of an entirely folded out position of the strut (5,6) of the chassis, which is pivotable relative to the housing (28) of the articulation joint (4), finds a lock-in recess (107) or a lock-in depression, into which it can slide for a locking of the strut (5,6) of the chassis, or which it selectively releases or shuts for a spring-mounted part at the strut (5,6) of the chassis.

3. The baby carriage (1) according to claim 1 or 2, **characterized in that** a front wheel strut (5), a rear wheel strut (6), and/or a leg (7) of a push bar (8) are located within a common plane.

4. The baby carriage (1) according to one of the preceding claims, **characterized in that** the locking body (102)
a) is movably guided in a plane, which is spanned by the two pivot axes (80,101), and/or
b) comprises an elongated hole (103), through which the pivot axis (101) for that strut (5,6) of the chassis is preferably passed through, which is neither rigidly connected to the housing (28) of the articulation joint (4) nor to the extension (32) thereof.

5. The baby carriage (1) according to one of the preceding claims, **characterized in that** the locking body (102) is biased by a spring (104), especially in a direction towards that folded-out strut (5,6) of the chassis, which is neither rigidly connected to the housing (28) of the articulation joint (4) nor to the extension (32) thereof, preferably wherein the spring (104)
a) is formed as a compression spring and/or as a coil spring, and/or
b) is arranged within the elongated hole (103) of the locking body (102) in such a way, that its spring force is directed parallel to the longitudinal direction of the elongated hole (103), and is supported, preferably at one end, on the pivot axis (101) for that strut (5,6) of the chassis, which is neither rigidly connected to the housing (28) of the articulation joint (4) nor to the extension (32) thereof, while, however, at its other end, it is supported at the inner side of the elongated hole (103).

6. The baby carriage (1) according to one of the preceding claims, **characterized in that** the cam (110)
a) comprises a convexly curved contact surface (111) for an abutment at the thrust surface (112) of a part of the articulation joint (4), which is linked in a non-twistable fashion to a connector for a leg (7) of the push bar (8), and/or
b) is coupled to the locking body (102) in such a way that it is able to take the locking body (102) off from its locking position within that strut (5,6) of the chassis, which is not rigidly connected to the housing (28) of the articulation joint (4),

7. The baby carriage (1) according to one of the preceding claims, **characterized by** a two-armed lever (108) mounted in a pivotable fashion for coupling the cam (110) to the locking body (102), wherein one arm of the lever (108) is connected and/or coupled to the cam (110), and the other arm of the lever (108) to the locking body (102), preferably wherein the pivot axis (109) of the two-armed lever (108) is parallel to the pivot axis (80) for the connection of the push bar (8) and/or parallel to the pivot axis (101) for the connection of that strut (5,6) of the chassis, which is not linked to the housing (28).

8. The baby carriage (1) according to claim 7, **characterized in that** the two-armed lever (108) is formed as a rocker, whose two arms commonly limit a preferably obtuse angle, preferably wherein the contact surface (111) of the cam (110) for an abutment at the thrust surface (112) of that part of the articulation joint (4), which is linked in a non-twistable fashion to a connector for a leg (7) of the push bar (8), is arranged at the obtuse-angled inner side of the rocker-shaped lever (108).

9. The baby carriage (1) according to claim 7 or 8, **characterized in that** that arm of the two-armed lever (108), which is coupled to the locking body (102), encompasses an area of or at the locking body (102), in order to retract the latter in a direction towards the pivot axis (80) of the push bar (8).

10. The baby carriage (1) according to one of the preceding claims, **characterized in that** that arm of the two-armed lever (108), which is coupled to the locking body (102), comprises an elongated hole (103), through which a pin (114) of the locking body (102) is passed through, which extends transversely to the longitudinal direction or to the direction of movement of the locking body (102), preferably wherein the longitudinal direction of the elongated hole (103) in the two-armed lever (108) extends past the pivot axis (109) thereof, especially in the area of the inner side thereof.

11. The baby carriage (1) according to claim 10, **characterized in that** the pin (114) of the locking body (102), which is encompassed by the elongated hole (113) of the two-armed lever (108), extends parallel to the pivot axis (109) of the two-armed lever (108), and/or parallel to the pivot axis (80) for the connection of the push bar (8) and/or parallel to the pivot axis (101) for the connection of that strut (5,6) of the chassis, which is pivotable relative to the housing (28) of the articulated joint (4).

12. The baby carriage (1) according to claim 10 or 11, **characterized in that** a groove or recess for the two-armed lever (108) is provided in the rear side of the locking body (102) facing away from the regarding strut (5,6) of the chassis, which groove or recess is penetrated by a pin (114) of the locking body (102), which penetrates the elongated hole (103) of two-armed lever (108), too.

13. The baby carriage (1) according to one of the preceding claims, **characterized in that** a slanting thrust surface (115), which is inclined with respect to the longitudinal direction of the locking body (102), is provided at the front side of the locking body (102), which is facing the regarding strut (5,6) of the chassis, wherein, in case of a pivoting out of the regarding strut (5,6) of the chassis, the slanting thrust surface (115) extends along an edge of the lock-in recess (107), and, together with the locking body (102), is pushed back by the latter, in order to enable a complete folding out of the regarding strut (5,6) of the chassis.

14. The baby carriage (1) according to one of the preceding claims, **characterized in that** at least one flank, which is parallel to the longitudinal axis or direction of movement of the locking body (102), is provided in the area of the front side of the locking body (102), which is facing the regarding strut (5,6) of the chassis, wherein, in case of a clicking into place of the regarding strut (5,6) of the chassis, the flank grips behind an edge of the lock-in recess (107) and prevents a swinging in of the regarding strut (5,6) of the chassis as long as the locking body (102) is pulled out.

15. The baby carriage (1) according to one of the preceding claims, **characterized in that**, for releasing the locking of an articulated joint (4), a rocker (108) is provided which operates against at least one spring element (104).

## Revendications

1. Poussette (1) comportant un châssis (2) présentant des liaisons articulées latérales (4) munies de raccordements pour des jambes du châssis (2) sous la forme d'une jambe de roue avant (5) et/ou d'une jambe de roue arrière (6) ainsi que pour une branche (7) d'un guidon (8),
a) en ce qu'un élément de verrouillage (102) peut être glissé pour son verrouillage dans une ouverture d'encliquetage (107) lorsque la jambe de châssis (5, 6) est entièrement déployée,
**caractérisée en ce que**
b) une surface d'attaque (112) pour une came (110) est ménagée au niveau d'un élément de la liaison articulée (4) relié de manière solidaire en rotation au raccordement pour une branche (7) du guidon (8), la came étant reliée ou accouplée à l'élément de verrouillage (102) ou à un élément guidé dans l'ouverture d'encliquetage (107) pour le commander dans un sens approximativement radial de la liaison articulée (4) concernée,
c) et **en ce qu'**au moins un élément d'accouplement, à savoir l'élément de verrouillage (102) précontraint le cas échéant dans son sens de déplacement ou l'ouverture d'encliquetage (107), se trouve au niveau de la jambe de châssis (5, 6) tandis qu'au moins un autre élément d'accouplement coopérant solidairement à des fins de verrouillage de la jambe de châssis (5, 6) entièrement déployée est disposé au niveau d'un élément de la liaison articulée (4), en particulier au niveau de son enveloppe (28) ou au niveau d'un prolongement (32),
d) et **en ce que** le pivot (101) de la jambe de châssis (5, 6) qui n'est pas relié de manière rigide à l'enveloppe (28) de la liaison articulée (4) est disposé de manière excentrique par rapport à l'axe de pivotement (80) pour la branche (7) du guidon (8).

2. Poussette (1) selon la revendication 1, **caractérisée en ce que** l'élément de verrouillage (102) peut être guidé de manière coulissante ou est monté dans l'enveloppe (28) de la liaison articulée (4) ou dans son prolongement (32) ou dans la jambe de châssis (5, 6) dans un sens essentiellement radial par rapport à l'axe de pivotement (80) du guidon (8) et en position entièrement déployée de la jambe de châssis (5, 6) pouvant être amenée à pivoter par rapport à l'enveloppe (28) de la liaison articulée (4) présente une cavité ou ouverture d'encliquetage (107) dans laquelle il peut être glissé pour le verrouillage de la jambe de châssis (5, 6), ou soit qu'il dégage ou ferme pour un élément monté sur ressort au niveau de la jambe de châssis (5, 6).

3. Poussette (1) selon la revendication 1 ou 2, **caractérisée en ce qu'**une jambe de roue avant (5), une jambe de roue arrière (6) et/ou une branche (7) du guidon (8) sont dans un plan commun.

4. Poussette (1) selon l'une des revendications précédentes, **caractérisée en ce que** l'élément de verrouillage (102)
a) est guidé de manière coulissante dans le plan défini par les deux axes de pivotement (80, 101), et/ou
b) comporte un trou oblong (103) par lequel de préférence passe le pivot (101) pour la jambe de châssis (5, 6) reliée de manière non rigide à l'enveloppe (28) de la liaison articulée (4) et également non reliée à son prolongement (32).

5. Poussette (1) selon l'une des revendications précédentes, **caractérisée en ce que** l'élément de verrouillage (102) est précontraint par un ressort (104), en particulier dans le sens de la jambe de châssis (5, 6) déployée, reliée de manière non rigide à l'enveloppe (28) de la liaison articulée (4) et également non reliée à son prolongement (32), de préférence **en ce que** le ressort (104)
a) est réalisé sous forme de ressort de compression et/ou de ressort spiral, et/ou
b) est disposé dans le trou oblong (103) de l'élément de verrouillage (102) de telle sorte que son élasticité est orientée parallèlement au sens longitudinal du trou oblong (103) et repose de préférence avec une extrémité sur le pivot (101) pour la jambe de châssis (5, 6) reliée de manière non rigide à l'enveloppe (28) de la liaison articulée (4) et également non reliée à son prolongement (32), par contre avec son autre extrémité de préférence au niveau de la face intérieure d'une extrémité du trou oblong (103).

6. Poussette (1) selon l'une des revendications précédentes, **caractérisée en ce que** la came (110)
a) présente une surface de contact convexe (111) pour l'application au niveau de la surface d'attaque (112) de l'élément de la liaison articulée (4) relié de manière solidaire en rotation au raccordement pour une branche (7) du guidon (8), et/ou
b) est accouplée à l'élément de verrouillage (102) de sorte qu'elle peut retirer celui-ci de sa position de verrouillage dans la jambe de châssis (5, 6) reliée de manière non rigide à l'enveloppe (28) de la liaison articulée (4).

7. Poussette (1) selon l'une des revendications précédentes, **caractérisée par** un levier (108) à deux bras articulé servant à l'accouplement de la came (110) à l'élément de verrouillage (102), en ce qu'un bras du levier (108) est relié et/ou accouplé à la came (110) et son autre bras est relié et/ou accouplé à l'élément de verrouillage (102), en ce que de préférence l'axe de pivotement (109) du levier (108) à deux bras est parallèle à l'axe de pivotement (80) pour le raccordement du guidon (8) et/ou parallèle au pivot (101) pour le raccordement de la jambe de châssis (5,6) non reliée à l'enveloppe (28).

8. Poussette (1) selon la revendication 7, **caractérisée en ce que** le levier (108) à deux bras est réalisé sous forme de bascule dont les deux bras forment de préférence un angle obtus, **en ce que** de préférence la surface de contact (111) de la came (110) pour l'application au niveau de la surface d'attaque (112) de l'élément de la liaison articulée (4) relié de manière solidaire en rotation au raccordement pour une branche (7) du guidon (8) est disposée au niveau du côté intérieur à angle obtus du levier (108) en forme de bascule.

9. Poussette (1) selon l'une des revendications 7 ou 8, **caractérisée en ce que** le bras accouplé à l'élément de verrouillage (102) du levier (108) à deux bras enveloppe une zone de ou au niveau de l'élément de verrouillage (102) afin de pouvoir retirer celui-ci vers l'axe de pivotement (80) du guidon (8).

10. Poussette (1) selon l'une des revendications précédentes, **caractérisée en ce que** le bras accouplé à l'élément de verrouillage (102) du levier à deux bras (108) comporte un trou oblong (113) par lequel passe une goupille (114) de l'élément de verrouillage (102), laquelle est transversale par rapport au sens longitudinal et/ou de déplacement de l'élément de verrouillage (102), **en ce que** de préférence le sens longitudinal du trou oblong (113) dans le levier (108) à deux bras passe devant son axe de pivotement (109), en particulier dans la zone de sa face intérieure.

11. Poussette (1) selon la revendication 10, **caractérisée en ce que** la goupille (114) de l'élément de verrouillage (102) qui est entourée par le trou oblong (113) du levier (108) à deux bras est parallèle à l'axe de pivotement (109) du levier (108) à deux bras et/ou parallèle à l'axe de pivotement (80) pour le raccordement du guidon (8) et/ou parallèle au pivot (101) pour le raccordement de la jambe de châssis (5, 6) pouvant être amenée à pivoter par rapport à l'enveloppe (28) de la liaison articulée (4).

12. Poussette (1) selon l'une des revendications 10 ou 11, **caractérisée en ce qu'**une rainure ou gorge est prévue pour le levier à deux bras (108) dans la face arrière opposée à la jambe de châssis (5, 6) concernée de l'élément de verrouillage (102), ladite rainure ou gorge étant traversée par une goupille (114) de l'élément de verrouillage (102) qui traverse également le trou oblong (113) du levier à deux bras (108).

13. Poussette (1) selon l'une des revendications précédentes, **caractérisée en ce qu'**au niveau de la face avant de l'élément de verrouillage (102) qui est tournée vers la jambe de châssis (5, 6) concernée est prévue une surface d'attaque (115) oblique, inclinée par rapport au sens longitudinal de l'élément de verrouillage (102), ladite surface d'attaque lors du pivotement vers l'extérieur de la jambe de châssis (5, 6) concernée s'étend le long d'un bord de la cavité ou ouverture d'encliquetage (107) et est provisoirement repoussée par celle-ci conjointement avec l'élément de verrouillage (102) afin de permettre un déploiement complet de la jambe de châssis (5, 6) concernée.

14. Poussette (1) selon l'une des revendications précédentes, **caractérisée en ce qu'**au moins un flanc parallèle à l'axe longitudinal ou au sens de déplacement de l'élément de verrouillage (102) est prévu au niveau de la face avant de l'élément de verrouillage (102) qui est tournée vers la jambe de châssis (5, 6) concernée, ledit flanc s'engageant derrière un bord de la cavité d'encliquetage (107) lors de l'encliquetage de la jambe de châssis (5, 6) concernée et empêchant un rabattement de la jambe de châssis (5, 6) concernée tant que l'élément de verrouillage (102) est déployé.

15. Poussette (1) selon l'une des revendications précédentes, **caractérisée en ce qu'**une bascule (108) est prévue pour débloquer le blocage d'une liaison articulée (4) qui agit contre au moins un élément de ressort (104).
